(19) Europäisches Patentamt
European Patent Office
Office européen des brevets

(11) EP 3 500 795 B1

(12) **EUROPÄISCHE PATENTSCHRIFT**

(45) Veröffentlichungstag und Bekanntmachung des Hinweises auf die Patenterteilung:
**22.07.2020   Patentblatt 2020/30**

(21) Anmeldenummer: **17743006.3**

(22) Anmeldetag: **20.07.2017**

(51) Int Cl.:
*F21V 7/00* (2006.01)      *G01J 1/00* (2006.01)

(86) Internationale Anmeldenummer:
**PCT/EP2017/068341**

(87) Internationale Veröffentlichungsnummer:
**WO 2018/033340 (22.02.2018 Gazette 2018/08)**

(54) **VERFAHREN ZUR HERSTELLUNG EINER VERKEHRSWEGBELEUCHTUNGSEINRICHTUNG**

METHOD FOR PRODUCING A TRAFFIC ROUTE LIGHTING DEVICE

PROCÉDÉ DE FABRICATION D'UN DISPOSITIF D'ÉCLAIRAGE DE VOIES DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2016   DE 102016215193**

(43) Veröffentlichungstag der Anmeldung:
**26.06.2019   Patentblatt 2019/26**

(73) Patentinhaber: **SITECO GmbH**
**83301 Traunreut (DE)**

(72) Erfinder: **MUSCHAWECK, Julius**
**82131 Gauting (DE)**

(74) Vertreter: **Schmidt, Steffen et al**
**Boehmert & Boehmert**
**Anwaltspartnerschaft mbB**
**Pettenkoferstrasse 22**
**80336 München (DE)**

(56) Entgegenhaltungen:
**EP-A2- 2 244 085**

- **Anonyme: "Road Lighting Calculations CIE 140-2000", Commission internationale de l'éclairage , 2000, Seiten FP-28, XP002774660, ISBN: 3901906541 Gefunden im Internet: URL:http://www.51ballast.cn/tec/gf/8.pdf [gefunden am 2017-10-25]**
- **ZATARI A ET AL: "GLARE, LUMINANCE, AND ILLUMINANCE MEASUREMENTS OF ROAD LIGHTING USING VEHICLE MOUNTED CCD CAMERAS", LE, NY, Bd. 1, Nr. 2, 1. Oktober 2004 (2004-10-01) , Seiten 85-106, XP009073324, ISSN: 1550-2716, DOI: 10.1582/LEUKOS.2004.01.02.005**

EP 3 500 795 B1

**Beschreibung**

Die vorliegende Erfindung betrifft ein Verfahren zum Herstellen einer Verkehrswegbeleuchtungseinrichtung zum Beleuchten eines Verkehrswegs, bei dem in einem eine Lichtaustrittsöffnung aufweisenden Gehäuse ein Leuchtmittel und eine Optikeinheit derart angeordnet werden, dass von dem Leuchtmittel erzeugtes Licht mittels der Optikeinheit zur Lichtaustrittsöffnung gelenkt wird, damit die Verkehrswegbeleuchtungseinrichtung Licht mit einer vorgegebenen Lichtverteilung zum Beleuchten des Verkehrswegs abgibt, wobei die vorgegebene Lichtverteilung dadurch ermittelt wird, dass in eine Längsrichtung des Verkehrswegs mehrere äquidistant beabstandete Testpunkte auf einer Verkehrswegoberfläche des Verkehrswegs vorgesehen werden, von jedem der Testpunkte in eine jeweilige testpunktbezogene vorgegebene Richtung Licht mit einer vorgegebenen Leuchtdichte abgegeben wird, und die Optikeinheit und das Leuchtmittel zur Erreichung der vorgegebenen Lichtverteilung gewählt werden, und die Verkehrswegbeleuchtungseinrichtung mit der gewählten Optikeinheit und dem gewählten Leuchtmittel hergestellt wird.

Gattungsgemäße Verkehrswegbeleuchtungseinrichtungen sind dem Grunde im Stand der Technik umfänglich bekannt, sodass es eines gesonderten druckschriftlichen Nachweises hierfür nicht bedarf. Sie finden üblicherweise Einsatz zur Beleuchtung von Verkehrswegen wie Fahrbahnen von Straßen, Fußgängerwege, Fahrradwege, Kombinationen hiervon oder dergleichen. Auch wenn die überwiegende Anwendung gattungsgemäßer Verkehrswegbeleuchtungseinrichtungen gebäudeextern vorgesehen ist, kommen derartige Verkehrswegbeleuchtungseinrichtungen jedoch auch innerhalb von Gebäuden wie Fertigungshallen, Tunneln, Kombinationen hiervon und/oder dergleichen zum Einsatz.

Eine Verkehrswegbeleuchtung der gattungsgemäßen Art umfasst in der Regel ein oder mehrere Leuchtmittel, die in einem Gehäuse der Verkehrswegbeleuchtung angeordnet sind und die mit elektrischer Energie, beispielsweise aus einem öffentlichen Energieversorgungsnetz, einem lokalen Energiespeicher und/oder dergleichen, versorgt werden. Darüber hinaus umfasst die Verkehrswegbeleuchtungseinrichtung in der Regel auch eine Optikeinheit, mittels der von dem oder den Leuchtmitteln emittiertes Licht in vorgebbarer Weise gelenkt wird, sodass eine gewünschte Beleuchtungsfunktion für den Verkehrsweg bereitgestellt werden kann.

Das Leuchtmittel ist vorzugsweise ein elektrisch betreibbares Leuchtmittel, dem für seine bestimmungsgemäße Funktion der Lichtbereitstellung elektrische Energie zugeführt wird. Es kann beispielsweise durch eine Glühlampe, eine Gasentladungsröhre, aber auch durch ein Festkörperleuchtmittel, wie eine oder mehrere Leuchtdioden, eine oder mehrere Laserdioden, beispielsweise ein Laserscanner und/oder dergleichen, gebildet sein.

Die Optikeinheit kann beispielsweise einen oder mehrere Spiegel, eine oder mehrere Linsen, ein oder mehrere Prismen, Kombinationen hiervon und/oder dergleichen umfassen.

Darüber hinaus kann je nach Leuchtmittel auch ein Energiewandler von der Verkehrswegbeleuchtungseinrichtung umfasst sein, der dem Leuchtmittel zuzuführende elektrische Energie, die er von einer Energiequelle wie zum Beispiel dem öffentlichen Energieversorgungsnetz bezieht, in vorgebbarer Weise wandelt, damit das Leuchtmittel seine bestimmungsgemäße Lichtbereitstellungsfunktion in gewünschter Weise ausführen kann.

Insbesondere bei Straßenbeleuchtungen sind hierbei vorgegebene Normen zu berücksichtigen, die die Beleuchtungsfunktion betreffen. Eine solche Norm ist insbesondere die Norm EN-13201. Zugleich soll die Verkehrswegbeleuchtungseinrichtung einen möglichst geringen Energieverbrauch aufweisen. Während ein Gesamtlichtstrom für eine Beleuchtung eines vorgegebenen Bereichs mit einer vorgegebenen mittleren Beleuchtungsstärke durch einfaches Multiplizieren entsprechender Werte miteinander erhalten werden kann, berücksichtigen die relevanten Normen für eine Straßenbeleuchtung nicht eine Bedingung für die Beleuchtungsstärke. Stattdessen basieren sie auf optischen Spezifikationen für die Leuchtdichte an vorgegebenen Testpunkten eines vorgegebenen Bereichs, wie sie von einem an einer vorgegebenen Position positionierten Beobachter wahrgenommen wird, wobei ungleichmäßige Streueffekte einer Fahrbahnoberfläche berücksichtigt werden. Daher variiert der Wert der Beleuchtungsstärke, der erforderlich ist, um eine vorgegebene Leuchtdichte an einem Testpunkt zu erzeugen, mit einer Winkelbeziehung zwischen dem Beobachter, der Fahrwegbeleuchtungseinrichtung und einem jeweiligen Testpunkt des Fahrwegs.

Eine vorgegebene beobachtbare Leuchtdichte kann mit einem geringen Lichtstrom erzeugt werden, wenn eine starke Vorwärtsstreuung für die durch die Winkelbeziehung gegebenen Winkel vorliegt und deshalb eine unterschiedliche Beleuchtungsstärkeverteilungen auf der Fahrbahn ebenfalls hinsichtlich ihrer Wirkung variieren. Die relevanten Normen spezifizieren keine Leuchtdichtemuster per se. Sie fordern vielmehr verschiedene, recht komplexe Anforderungen in Bezug auf eine mittlere Leuchtdichte, eine Gleichmäßigkeit und eine Blendung. Sie sind deshalb notwendig aber nicht hinreichend für die optische Konstruktion von Fahrwegbeleuchtungseinrichtungen.

"Road Lighting Calculations", 2000, Commission internationale de l'éclairage, Vienna, ISBN: 3901906541 offenbart Verfahren sowohl zur Berechnung von Leuchtdichten, Beleuchtungsstärken und den daraus abgeleiteten Gleichmäßigkeiten als auch zur Ermittlung der Kennzahlen der physiologischen Blendung. Darüber hinaus werden die Feststellungen für die Leuchtdichte- und Beleuchtungsstärkeraster beschrieben.

Der Erfindung liegt die Aufgabe zugrunde, ein gattungsgemäßes Verfahren zum Herstellen einer Verkehrswegbeleuchtungseinrichtung so zu verbessern, dass bei gegebenen Lichtstrom eine verbesserte Beleuchtung des Verkehrswegs erreicht werden kann.

Als Lösung wird mit der Erfindung ein Verfahren zum Herstellen einer Verkehrswegbeleuchtungseinrichtung nach Anspruch 1 vorgeschlagen.

Vorteilhafte Ausgestaltungen und Weiterbildungen ergeben sich anhand von Merkmalen der abhängigen Ansprüche.

Bezüglich eines gattungsgemäßen Verfahrens zum Herstellen der Verkehrswegbeleuchtungseinrichtung wird insbesondere vorgeschlagen, dass für das Ermitteln der Lichtverteilung ergänzend die folgenden Schritte ausgeführt werden:

- Bereitstellen eines die Testpunkte umfassenden Gitters mit Gitterlinien, wobei die Gitterlinien an Kreuzungsstellen Gitterpunkte des Gitters bilden,
- Festlegen einer bereitzustellenden Beleuchtungsstärke für den Verkehrsweg an den Gitterpunkten,
- Festlegen einer Interpolation für die Beleuchtungsstärke zwischen zwei benachbarten Gitterpunkten,
- Ermitteln der Lichtverteilung abhängig von der Beleuchtungsstärke zwischen den beiden Gitterpunkten.

Die Erfindung basiert auf der Erkenntnis, dass sich aus der Normung zwar punktuell Vorgaben hinsichtlich der vorgegebenen Lichtverteilung ergeben, jedoch in Zwischenbereichen die Lichtverteilung nahezu beliebig variieren kann. Die Erfindung setzt hier auf und ergänzt die Vorgaben durch die Normung durch zusätzliche Verfahrensschritte, die die Lichtverteilung betreffen, und mittels denen eine der Norm entsprechende Lichtverteilung weiter verbessert werden kann, indem für Bereiche zwischen den Testpunkten ebenfalls Vorgaben gemacht werden. Dabei berücksichtigt die Erfindung, dass die Normung überwiegend auf die Leuchtdichte abstellt, die bezüglich des Beobachters unter vorgegebenen Bedingungen an den vorgegebenen Testpunkten des Verkehrswegs abgegeben wird. Die Erfindung basiert darauf, dass ergänzend die Beleuchtungsstärke des Verkehrswegs berücksichtigt wird, wobei darüber hinaus insbesondere auch Werte für die Beleuchtungsstärke zwischen den Testpunkten vorgegeben werden. Insofern wird mit der Erfindung also eine erweiterte Lichtverteilung vorgegeben, anhand derer dann die Verkehrswegbeleuchtungseinrichtung hergestellt werden kann, indem die Optikeinheit und das Leuchtmittel entsprechend gewählt beziehungsweise konstruiert werden. Das Konstruieren und Wählen der Optikeinheit beziehungsweise des Leuchtmittels ist für den Fachmann an sich bei gegebener Lichtverteilung eine bekannte Maßnahme, die er unter Nutzung seines Fachwissens und/oder unter Nutzung von Entwicklungsinstrumenten, insbesondere Konstruktionssoftware und/oder der dergleichen bewältigen kann. Diesbezüglich ergeben sich weitere Hinweise aus dem unten angeführten Ausführungsbeispiel.

Ein Verkehrsweg im Sinne dieser Offenbarung dient zur Abwicklung einer Ortsveränderung von Personen, Gegenständen und/oder dergleichen. Ein Verkehrsweg ist unter anderem eine Straße, ein Weg irgendeiner Art sowie auch ein entsprechendes Bauwerk, wie eine Brücke, ein Tunnel, aber auch eine Wasserstraße und/oder dergleichen. Der Verkehrsweg kann sowohl künstlich angelegt als auch natürlich entstanden sein, beispielsweise als besondere geographische Umweltausprägung wie einem Gebirgspass, einem Tal, einem Fluss, einem See und/oder dergleichen. Häufig ist der Verkehrsweg dazu ausgebildet, von einem geeigneten Verkehrsmittel benutzt zu werden. Ein Verkehrsmittel ist bei einer Straße beispielsweise ein Fahrrad, ein Kraftfahrzeug wie ein Personenkraftwagen, ein Motorrad und/oder dergleichen, ein Lastkraftwagen, ein Omnibus, oder bei einer Wasserstraße ein Wasserfahrzeug, beispielsweise eine Fähre, ein Frachtschiff, ein Tankschiff und/oder dergleichen.

Entsprechend ist eine Verkehrswegbeleuchtungseinrichtung eine Einrichtung die Licht gemäß der vorgegebenen Lichtverteilung abgibt, um den Verkehrsweg in geeigneter, insbesondere vorgegebener Weise, zu beleuchten. Solche Einrichtungen sind insbesondere Straßenbeleuchtungseinrichtungen, wie zum Beispiel Straßenlaternen oder dergleichen, bekannt. Die Verkehrswegbeleuchtungseinrichtung kann sowohl für einen Innenbereich als auch für einen Außenbereich vorgesehen sein. In der Regel umfasst die Verkehrswegbeleuchtungseinrichtung ein Gehäuse mit einer Lichtaustrittsöffnung, aus der Licht gemäß der vorgegebenen Lichtverteilung abgegeben wird. Zu diesem Zweck umfasst die Verkehrswegbeleuchtungseinrichtung ein Leuchtmittel und in aller Regel auch eine geeignete Optikeinheit, sodass die vorgegebene Lichtverteilung bereitgestellt werden kann.

Die Lichtverteilung gibt an, auf welche Weise ein vorgegebener Bereich, hier der Verkehrsweg oder ein Teil davon, mit Licht durch die Verkehrswegbeleuchtungseinrichtung beaufschlagt wird. Häufig sind für den Verkehrsweg mehrere Verkehrswegbeleuchtungseinrichtungen vorgesehen, die entlang einer Längserstreckung des Verkehrswegs angeordnet sind, beispielsweise mittels seitlich zum Verkehrsweg aufgestellter Laternenmasten, aufgehängt an abgespannten Seilen und/oder dergleichen. In diesem Sinne ist auch umfasst, dass der zu beleuchtende vorgegebene Bereich des Verkehrswegs beispielsweise auch lediglich ein vorgegebener Abschnitt des Verkehrswegs sein kann, beispielsweise eine Fahrbahn einer Straße mit mehreren Fahrbahnen, ein Fahrbahnabschnitt, ein seitlicher Gehweg einer Straße, aber auch Längsabschnitte des Verkehrswegs und/oder dergleichen.

Der vorgegebene Bereich wird durch die Verkehrswegbeleuchtungseinrichtung gemäß der vorgegebenen Lichtverteilung ausgeleuchtet. Bei einer Straßenbeleuchtung ist die Lichtverteilung derart gewählt, dass die Anforderungen durch die Normung, und hier insbesondere die EN13201, erfüllt sind.

Als Leuchtmittel kommt häufig ein Leuchtmittel in Betracht, welches elektrische Energie nutzt, um Licht bereitzustellen. Das Leuchtmittel kann beispielsweise eine Gasentladungsröhre, eine Glühlampe, aber auch ein Festkörperleuchtmittel wie eine Leuchtdiode, eine Laserdiode, insbesondere nach Art eines Laserscanners, und/oder dergleichen umfassen. Es können auch mehrere Leuchtmittel vorgesehen sein, die beispielsweise in einer vorgegebenen Anordnung, wie zum Beispiel eine Matrixanordnung oder dergleichen, im Gehäuse angeordnet sind.

Dem Grunde nach kann das Leuchtmittel natürlich auch einen Brennstoff nutzen, um Licht bereitzustellen, beispielsweise Gas, Öl, Benzin und/oder dergleichen. Diese Ausgestaltung eignet sich insbesondere für den Fall, dass eine Verkehrswegbeleuchtungseinrichtung an einer Stelle bereitzustellen ist, an der ein öffentliches Energieversorgungsnetz nicht zur Verfügung steht und/oder nicht zur Verfügung gestellt werden kann.

Die Optikeinheit ist derart ausgebildet und im Gehäuse angeordnet, dass sie das vom Leuchtmittel bereitgestellte Licht erfasst und zur Lichtaustrittsöffnung lenkt, wobei zugleich das bereitgestellte Licht derart gelenkt wird, dass die vorgegebene Lichtverteilung zum Beleuchten des Verkehrswegs erreicht werden kann. Zu diesem Zweck kann die Optikeinheit eines oder mehrere refraktorische Elemente wie Linsen, Prismen und/oder dergleichen sowie auch entsprechende reflektorische Elemente wie Spiegel oder dergleichen umfassen.

Um beispielsweise eine normgerechte Lichtverteilung erreichen zu können, kann vorgesehen sein, dass in eine Längsrichtung des Verkehrswegs mehrere äquidistant beabstandete Testpunkte auf der Verkehrsoberfläche des Verkehrswegs vorgesehen werden. Von jedem der Testpunkte wird in eine jeweilige testpunktbezogene vorgegebene Richtung Licht mit einer vorgegebenen Leuchtdichte abgegeben. Die testpunktbezogene vorgegebene Richtung ergibt sich beispielsweise dadurch, dass die Richtung durch eine Verbindungsgerade eines jeweiligen Testpunktes zu einer vorgegebenen räumlichen Position eines vorgegebenen Beobachters ermittelt wird. In dieser Richtung ist die vorgegebene Leuchtdichte vom Testpunkt abzugeben. Entsprechend sind die Optikeinheit und das Leuchtmittel zur Erreichung der vorgegebenen Lichtverteilung zu wählen. Zu diesem Zweck können vorhandene Konstruktionshilfen, beispielsweise Simulationsprogramme wie "LightTools", ASAP (Advanced System Analysis Program) und/oder dergleichen herangezogen werden. Der Fachmann kann dann mit Hilfe dieser Werkzeuge die Optikeinheit und das Leuchtmittel entsprechend wählen.

Mit der so ermittelten Optikeinheit und dem entsprechenden Leuchtmittel kann dann die Verkehrswegbeleuchtungseinrichtung hergestellt werden. Der Herstellprozess umfasst unter anderem die Bereitstellung eines geeigneten Gehäuses, in dem das Leuchtmittel und die Optikeinheit in den vorgegebenen Positionen zueinander dauerhaft angeordnet sind. Das Gehäuse kann darüber hinaus weitere Elemente umfassen, beispielsweise einen Mast, eine Aufhängevorrichtung und/oder dergleichen.

Die Testpunkte können beispielsweise entlang einer Mittellinie des Verkehrswegs im vorgegebenen äquidistanten Abstand zueinander angeordnet sein. Darüber hinaus können ergänzend auch jeweils parallel angeordnete Reihen von Testpunkten vorgesehen sein, wobei die Reihe vorzugsweise in einem Abstand von etwa zwei Dritteln des Abstands der Mittellinie des Verkehrswegs zum seitlichen Rand des Verkehrswegs von der Mittellinie angeordnet ist. Je nach Norm oder Vorgabe kann hier auch eine Abweichung vorgesehen sein. Die Testpunkte sind vorzugsweise über den vorgegebenen Bereich verteilt angeordnet. Der vorgegebene Bereich kann demnach insbesondere durch die Anzahl und Anordnung der Testpunkte definiert sein.

Ergänzend wird mit der Erfindung vorgeschlagen, dass ein die Testpunkte umfassendes Gitter mit Gitterlinien bereitgestellt wird. Vorzugsweise erstreckt sich das Gitter über den vorgegebenen Bereich. Die Gitterlinien bilden an Kreuzungsstellen Gitterpunkte des Gitters aus. Dadurch wird der vorgegebene Bereich durch ein Netz von Gitterlinien abgedeckt. Erfindungsgemäß wird nun an den Gitterpunkten eine bereitzustellende Beleuchtungsstärke für den Verkehrsweg festgelegt. Dies erfolgt ergänzend zu dem vorgenannten Vorgehen, welches auf die testpunktbezogene Leuchtdichte abstellt. Im Unterschied zum normgerechten Vorgehen wird nun aber nicht nur auf die Leuchtdichte an vorgegebenen Testpunkten abgestellt, sondern es wird eine Interpolation für die Beleuchtungsstärke zwischen zwei benachbarten Gitterpunkten jeweils festgelegt. Unter Berücksichtigung dieser vorgegebenen Beleuchtungsstärke für den vorgegebenen Bereich wird dann die Lichtverteilung ergänzend abhängig von der Beleuchtungsstärke zwischen den Gitterpunkten ermittelt.

Dadurch erreicht die Erfindung, dass eine erheblich gleichmäßigere Beleuchtung bereitgestellt werden kann, die zudem gegebenenfalls mit einem geringeren Lichtstrom auskommt, als eine rein normgerechte Fahrwegbeleuchtungseinrichtung. Dadurch kann nicht nur eine bessere Beleuchtung des Verkehrswegs sondern auch ein Einsparen von Energie erreicht werden. Gerade im Bereich der Verkehrswegbeleuchtungseinrichtung wirkt sich das Einsparen von Energie besonders aus, da üblicherweise Verkehrswegbeleuchtungseinrichtungen über große Zeiträume betrieben werden. Auch kleine Effizienzvorteile wirken sich daher insgesamt in der Energiebilanz der Verkehrswegbeleuchtungseinrichtung besonders positiv aus.

Ausgehend von der Annahme, dass eine gute Fahrwegbeleuchtungseinrichtung einen minimalen Energieverbrauch aufweisen sollte, wobei zugleich die vorgenannten, durch Normen gegebenen Anforderungen ohne Over-Engineering erreicht werden sollten, wird insbesondere vorgeschlagen, den optischen Konstruktionsprozess in zwei Phasen aufzuteilen:

In einer ersten Phase kann der Fokus auf eine Verteilung des Lichts gelegt werden, wobei versucht werden sollte, die optimale Verteilung zu erreichen. Es zeigt sich, dass es möglich ist, diese Suche als ein nummerisches Optimierungsproblem zu formulieren, wobei eine Gewinnfunktion linear ist und die Randbedingungen glatt und konvex sind. Ein Innenpunktverfahren für eine nummerische Optimierung von großen Problemen ist gut geeignet, ein derartiges Optimierungsproblem zu lösen. Darüber hinaus erlauben eine Linearität der Gewinnfunktion und die Konvexität der Randbedingungen, dass, wenn der Zielbereich nicht leer ist, das heißt, es existieren Muster, welche konform zu den Normen sind, es lediglich ein einziges globales Optimum gibt.

In einer zweiten Phase können vorzugsweise verfügbare Werkzeuge zum optischen Konstruieren einer Beleuchtung genutzt werden, um ein optimales System zu konstruieren, das entweder exakt die optimale Verteilung bereitstellt oder diesen so weit wie möglich unter gegebenen mechanischen und materiellen Grenzen nahekommt.

Die Erfindung basiert auf der Norm EN-13201 in der Version 2003. Die EN-13201-2 definiert Lichtklassen (zum Beispiel ME1), wohingegen die EN-13201-3 definiert, wie Performancekriterien zu kalkulieren sind. Vorliegend ist der Bereich auf die ME-Klassen gerichtet. Es ist jedoch für den Fachmann einfach nachvollziehbar, die Erfindung auch auf MEW-Klassen dieser Norm auszudehnen, indem lediglich eine Gesamtuniformität für feuchte Oberflächen zu den Randbedingungen hinzugefügt wird. Auch andere Klassen, wie zum Beispiel CE, S, A, ES, EV dieser Norm und dergleichen können entsprechend behandelt werden.

Die Erfindung ermöglicht es folglich, eine verbesserte Lichtverteilung vorzugeben, die zugleich die Anforderungen hinsichtlich der Normung erfüllt.

Gemäß einer vorteilhaften Weiterbildung wird vorgeschlagen, dass die Gitterpunkte in eine Längsrichtung des Verkehrswegs zumindest derart beabstandet werden, dass ein Abstand benachbarter Gitterpunkte mindestens dem Abstand zwischen Benachbarten der Testpunkte entspricht. Zumindest in die Längsrichtung des Verkehrswegs kann somit der Aufwand für die Ermittlung der Lichtverteilung gering gehalten werden, da die Anzahl der Gitterpunkte die Anzahl der Testpunkte nicht zu überschreiten braucht. Darüber hinaus nutzt diese Ausgestaltung die Tatsache, dass die Beleuchtungsstärke zwischen den Gitterpunkten interpoliert wird. Anders als bei dem normgerechten Vorgehen erfolgt deshalb keine ausschließlich punktuelle Betrachtung in Bezug auf die Ermittlung der Lichtverteilung. Dadurch kann auch mit einer deutlich geringeren Anzahl von Gitterpunkten gegenüber der Anzahl der Testpunkte die Lichtverteilung trotzdem noch deutlich verbessert werden.

Eine vorteilhafte Weiterbildung sieht vor, dass eine Gütefunktion für einen durch die Lichtaustrittsöffnung abzugebenden Lichtstrom bereitgestellt wird, die während des Ermittelns der Lichtverteilung minimiert wird. Diese Ausgestaltung erlaubt es, die Energieeffizienz der Fahrwegbeleuchtungseinrichtung weiter zu verbessern. Durch das Minimieren der Gütefunktion kann nämlich zugleich auch der Aufwand für den Lichtstrom reduziert werden, der erforderlich ist, die vorgegebene Lichtverteilung bereitzustellen. Die Gütefunktion kann insbesondere Eigenschaften des Leuchtmittels und/oder der Optikeinheit berücksichtigen. Ferner kann sie auch einen Wirkungsgrad des Leuchtmittels berücksichtigen, der angibt, mit welcher Effizienz das Leuchtmittel Licht aus der zugeführten Energie erzeugt.

Vorzugsweise wird als Interpolation eine lineare Interpolation festgelegt. Dadurch kann die Interpolation auf einfache Weise realisiert werden und zugleich auch einer numerischen Behandlung zugeführt werden. Der Aufwand für die Ermittlung der vorgegebenen Lichtverteilung sowie der Optikeinheit und des Leuchtmittels kann dadurch reduziert werden.

Darüber hinaus wird vorgeschlagen, dass das Festlegen der linearen Interpolation für die Beleuchtungsstärke eine bilineare Interpolation zwischen benachbarten Gitterpunkten umfasst. Dadurch wird nicht nur eine Beleuchtungsstärke an Verbindungslinien benachbarter Gitterpunkte definiert, sondern auch in einem Flächenbereich dazwischen. Dadurch kann über den gesamten vorgegebenen Bereich an nahezu jeder beliebigen Stelle ein Wert für die Beleuchtungsstärke angegeben werden, der durch die vorgebbare Lichtverteilung erreicht werden soll. Insgesamt kann dadurch eine weitere Verbesserung in Bezug auf die Lichtverteilung erreicht werden. Zugleich erlaubt es die bilineare Interpolation, den Aufwand für die Ermittlung der vorgegebenen Lichtverteilung trotzdem überschaubar zu halten.

Insbesondere werden die Gitterpunkte in einem rechteckigen, die Testpunkte umfassenden Bereich vorgesehen, wobei die Gitterpunkte über den Bereich, vorzugsweise ungleichmäßig, verteilt angeordnet sind. Dadurch ist es möglich, den Aufwand weiter zu reduzieren, weil nur so viele Gitterpunkte vorgesehen zu werden brauchen, wie erforderlich sind, um die vorgegebene Lichtverteilung zuverlässig ermitteln zu können. Der rechteckige Bereich ist vorzugsweise der vorgegebene Bereich, der zumindest einen Ausschnitt des Verkehrswegs darstellen kann. Anders als die Testpunkte brauchen die Gitterpunkte also nicht gleichmäßig beabstandet zu sein. Dies kann sowohl für die Längsrichtung des Verkehrswegs als auch für die Querrichtung vorgesehen sein.

Der Bereich ist vorzugsweise in eine Breitenrichtung des Verkehrswegs durch eine Kante wenigstens eines Seitenstreifens des Verkehrswegs begrenzt. Dadurch ist es auf einfache Weise möglich, den Bereich beziehungsweise vorgegebenen Bereich hinsichtlich einer Quererstreckung in Bezug auf die Längsrichtung des Verkehrswegs zu definieren. So kann der vorgegebene Bereich auf einfache Weise festgelegt werden.

Vorzugsweise werden Werte der Beleuchtungsstärke an solchen Gitterpunkten, die sich an der Kante des wenigstens einen Seitenstreifens des Verkehrswegs befinden, zu null gesetzt. Dadurch kann der Ermittlungsaufwand für die Ermittlung der vorgegebenen Lichtverteilung weiter reduziert werden. Diese Ausgestaltung berücksichtigt, dass außerhalb des Verkehrswegs eine Beleuchtung nicht erforderlich ist.

Eine weitere Ausgestaltung der Erfindung schlägt vor, dass eine Erstreckung des Bereichs in die Längsrichtung des Verkehrswegs einer zwölffachen Höhe der Lichtaustrittsöffnung oberhalb der Verkehrswegoberfläche entspricht. Es hat sich gezeigt, dass die Begrenzung des Bereichs beziehungsweise vorgegebenen Bereichs in die Längsrichtung des Verkehrswegs sinnvoll ist, um den Aufwand für die Ermittlung der Lichtverteilung weiter zu reduzieren. Dabei hat sich die vorgenannte Wahl für die Erstreckung des Bereichs in die Längsrichtung des Verkehrswegs als zweckmäßig aus der Erfahrung heraus erwiesen. Zwar können auch größere Bereiche für die Erfindung zugrunde gelegt werden, jedoch führt dies im Wesentlichen nur zu einem erhöhten Ermittlungsaufwand für die Lichtverteilung, ohne dass ein signifikanter Vorteil in Bezug auf die Qualität der Lichtverteilung erreicht werden könnte. Wird dahingegeben ein kleinerer Wert herangezogen, ist die Auswirkung auf das Ermitteln der Lichtverteilung nicht immer zu vernachlässigen.

Eine weitere vorteilhafte Ausgestaltung sieht vor, dass Gitterpunkte des Bereichs in lokalen Koordinaten in Bezug auf einen vorgegebenen Referenzpunkt des Bereichs angegeben werden. Dadurch kann der Aufwand für die Ermittlung der vorgegebenen Lichtverteilung weiter reduziert werden, insbesondere wenn als Referenzpunkt ein Punkt herangezogen wird, der zur Position der Lichtaustrittsöffnung der Verkehrswegbeleuchtungseinrichtung in Bezug steht. Vorzugsweise ist der Referenzpunkt diese Position.

Eine vorteilhafte Weiterbildung der Erfindung sieht vor, dass die Lichtverteilung ergänzend abhängig von einer Schwellwerterhöhung, einer lichttechnischen Oberflächeneigenschaft der Verkehrswegoberfläche, einen Wartungsfaktor und/oder einem Umgebungsbeleuchtungsstärkeverhältnis ermittelt wird. Dadurch kann das Ermitteln der Lichtverteilung weiter optimiert werden, sodass besondere zusätzliche Eigenschaften durch die vorgegebene Lichtverteilung erfüllt werden. Dies betrifft insbesondere die Schwellwerterhöhung TI (englisch: threshold increment), die Blendungseffekte berücksichtigt. Darüber hinaus können Oberflächeneigenschaften der Verkehrswegoberfläche berücksichtigt werden, wie sie beispielsweise durch r-Tabellen in der Norm EN-13201 erfasst sind. Aber auch andere Möglichkeiten der Erfassung der Oberflächeneigenschaft der Verkehrswegoberfläche können in Betracht gezogen werden. Darüber hinaus kann auch das Umgebungsbeleuchtungsstärkeverhältnis SR (englisch: surround ratio) berücksichtigt werden. Damit können Eigenschaften von Umgebungslicht berücksichtigt werden, die die Beleuchtung des Verkehrswegs betreffen können. Dies können beispielsweise Gebäudebeleuchtungen oder dergleichen sein. Darüber hinaus kann auch der Wartungsfaktor MF (englisch: maintenance factor) berücksichtigt werden. Hierdurch kann beispielsweise berücksichtigt werden, wie die Verkehrswegbeleuchtungseinrichtung während des bestimmungsgemäßen Betriebs altert und damit ihren Lichtstrom und/oder auch die Lichtverteilung ändert. Weitere Faktoren können ergänzend berücksichtigt werden.

Es erweist sich ferner als vorteilhaft, wenn zum Ermitteln der Lichtverteilung eine Symmetrie für eine Anordnung von mehreren Verkehrswegbeleuchtungseinrichtungen in der Längsrichtung des Verkehrswegs berücksichtigt wird. Dadurch ist es möglich, den Abstand von benachbarten Verkehrswegbeleuchtungseinrichtungen entlang der Längsrichtung des Verkehrswegs so zu wählen, dass vorzugsweise im gesamten Bereich des Verkehrswegs die vorgegebene Lichtverteilung realisiert wird. Durch eine Nutzung der Symmetrie kann der Aufwand für das Ermitteln der vorgegebenen Lichtverteilung weiter reduziert werden. Beispielsweise ist es möglich, die vorgegebene Lichtverteilung einzig allein anhand der Eigenschaften des vorgegebenen Bereichs zu ermitteln. Durch entsprechende Anordnung von Verkehrswegbeleuchtungseinrichtungen in Längsrichtung kann dann eine entsprechende Lichtverteilung für den gesamten Verkehrsweg erreicht werden. Es ist also nicht nötig, für den gesamten Verkehrsweg eine vollständige Ermittlung der Lichtverteilung durchführen zu müssen. Dies kann auf den relevanten Bereich begrenzt werden, der im Wesentlichen durch die Beleuchtung durch eine einzelne Verkehrswegbeleuchtungseinrichtung erreicht wird.

Ferner kann vorgesehen sein, dass zum Ermitteln der Lichtverteilung geometrische Abmessungen der Lichtaustrittsöffnung vorgegeben werden. Diese Ausgestaltung berücksichtigt beispielsweise Anforderungen, die sich aufgrund der Wahl einer vorgegebenen Verkehrswegbeleuchtungseinrichtung ergeben, beispielsweise in Bezug auf das Gehäuse, eine Auswahl des Leuchtmittels und/oder der Optikeinheit oder dergleichen. Die geometrischen Abmessungen können aber auch durch weitere Anforderungen bestimmt sein, beispielsweise aufgrund mechanischer Anforderungen, Dichtheitsanforderungen und/oder dergleichen.

Schließlich wird mit der Erfindung ferner vorgeschlagen, dass das Herstellen der Optikeinheit umfasst: Ermitteln einer geometrischen Abmessung von wenigstens einem optischen Element der Optikeinheit sowie Ermitteln einer Position des wenigstens einen optischen Elements der Optikeinheit im Gehäuse der Verkehrswegbeleuchtungseinrichtung. Diese Ausgestaltung erlaubt es, einen hohen Freiheitsgrad bei der Gestaltung der Verkehrswegbeleuchtungseinrichtung zu realisieren. Die Optikeinheit kann somit nicht nur hinsichtlich ihrer eigenen Abmessung bedarfsgerecht gestaltet werden, sondern sie kann auch hinsichtlich der Gesamtwirkung in Bezug auf die Bereitstellung der vorgegebenen Lichtverteilung hinsichtlich ihrer Anordnung im Gehäuse nahezu frei festgelegt werden. Dadurch wird die Flexibilität hinsichtlich der Gestaltung der Verkehrswegbeleuchtungseinrichtung weiter verbessert.

Weitere Vorteile und Merkmale ergeben sich anhand der Beschreibung von Ausführungsbeispielen. In den Figuren der Ausführungsbeispiele bezeichnen gleiche Bezugszeichen gleiche Merkmale und Funktionen.

Es zeigen:

Fig. 1 in einer schematisch perspektivischen Darstellung eine Straße als Verkehrsweg mit Straßenleuchten als Verkehrswegbeleuchtungseinrichtungen,

Fig. 2 eine schematische Darstellung einer Winkelbeziehung zum Ermitteln einer normgerechten Beleuchtung gemäß der Norm EN-13201,

Fig. 3 eine Tabelle zum Ermitteln von Reflexionswerten gemäß der Norm EN-13201,

Fig. 4 schematisch ein Diagramm, mittels welchem logarithmisch r-Werte für eine R3-Oberfläche gemäß der Norm EN-13201 dargestellt sind,

Fig. 5 schematisch ein Diagramm, mittels welchem logarithmisch q-Werte für eine R3-Oberfläche gemäß der Norm EN-13201 dargestellt sind,

Fig. 6 schematisch ein dreidimensionales Diagramm zur Darstellung einer bilinearen Interpolation auf Basis von nicht-äquidistanten Gitterpunkten eines Gitters,

Fig. 7 schematisch ein Diagramm zum Ermitteln eines Satzes von linearen Randbedingungen von $U_0$,

Fig. 8 schematisch ein Diagramm mit einer konvexen Randbedingung, wobei Linearkombinationen von möglichen Punkten dargestellt sind,

Fig. 9 schematisch ein dreidimensionales Diagramm, in dem eine konvexe Randbedingung für die Schwellwerterhöhung dargestellt ist, und

Fig. 10 eine schematische Darstellung eines vorgegebenen Bereichs aus Fig. 1.

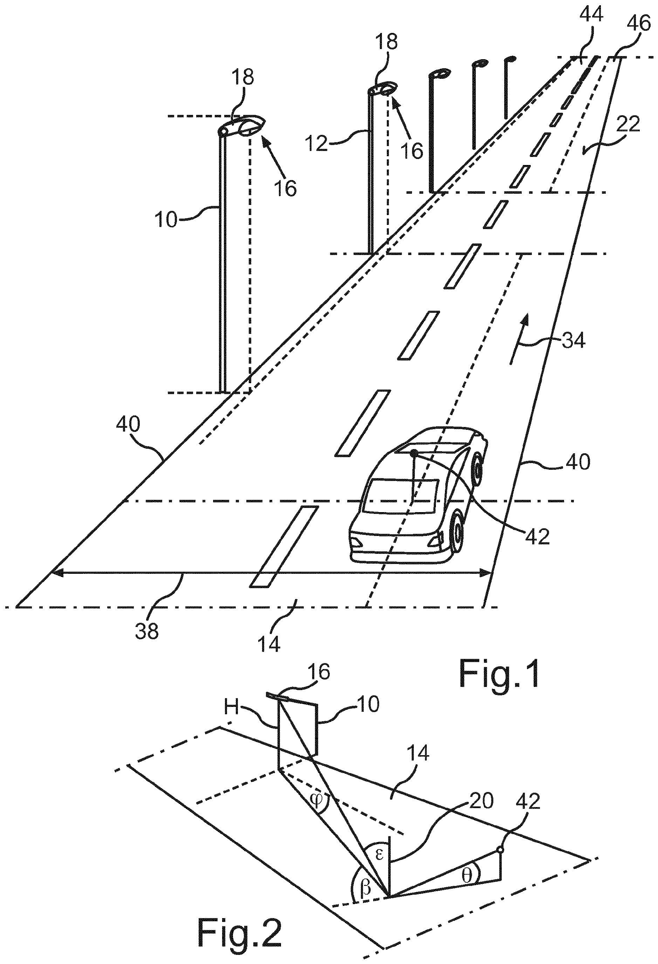

Im Folgenden wird die Erfindung anhand der Anwendung bei einer Straße 14 (Fig. 1) weiter erläutert. In diesem Zusammenhang wird der Begriff "längs" für eine Richtung entlang der Straße 14, das heißt, in Fahrwegrichtung 34, genutzt. Entsprechend wird der Begriff "quer" für die Breitenrichtung 38 quer zu der Straße 14, das heißt, quer zur Richtung des Fahrwegs, genutzt. Die Norm EN-13201 definiert als Feld für die Berechnung der Leuchtdichte einen rechteckigen Bereich der Straße 14 als einen vorgegebenen Bereich 36, der in eine Längsrichtung 34 durch zwei benachbarte Verkehrswegbeleuchtungseinrichtungen 10, 12, beziehungsweise Straßenbeleuchtungseinrichtungen, begrenzt ist und in eine Querrichtung 38 beziehungsweise Breitenrichtung durch seitliche Straßenbegrenzungen 40 als Kanten. Es ist ein Beobachter 42 für jede Fahrbahn 44, 46 des Verkehrswegs 14 vorgesehen, der 60m entfernt von der ersten Verkehrswegbeleuchtungseinrichtung 12 positioniert ist, und zwar mittig in Bezug auf die entsprechende Fahrbahn 46 und 1,5m oberhalb einer Fahrbahnoberfläche 22 beziehungsweise des Grundes.

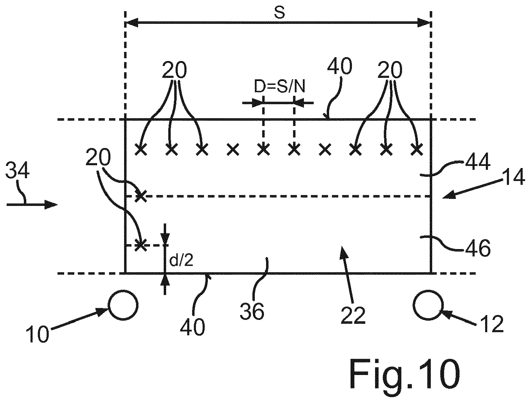

Berechnungspunkte bilden ein rechteckförmiges Gitter von Punkten auf einem Berechnungsfeld, welches dem vorgegebenen Bereich 36 entspricht. In Längsrichtung 34 sind wenigstens zehn Testpunkte 20 als Berechnungspunkte vorgesehen, die nicht weiter als 3m voneinander beabstandet sind. In Querrichtung 38 sind drei Testpunkte 20 pro Fahrbahn 44, 46 vorgesehen. Dieser Sachverhalt ist auch in Fig. 10 dargestellt.

Eine Beleuchtungsstärke L ist an einem bestimmten Testpunkt 20 gesehen von dem bestimmten Beobachter 42 eine Kerngröße, die für alle weiteren Anforderungen ausgenommen eines Umgebungsbeleuchtungsstärkeverhältnisses, herangezogen wird. Gemäß der Norm EN-13201 soll die Beleuchtungsstärke L unter Berücksichtigung des Beobachters 42, des jeweiligen Testpunkts 20 und von Positionen der Verkehrswegbeleuchtungseinrichtungen 10, 12, den Winkelverteilungen der vorzugsweise identischen Verkehrswegbeleuchtungseinrichtungen 10, 12 und sogenannter r-Tabellen berechnet werden. Die Norm EN-13201 beginnt mit einer detaillierten Beschreibung, wie eine Lichtstärke für gegebene C-Ebenen und Höhenwinkel interpoliert werden kann. Wie sich im Folgenden noch zeigen wird, wird die Verteilung durch Interpolieren eines Gitters 24 von Beleuchtungsstärkewerten auf der Straße 14 beschrieben. Dabei kann ein Diskretisierungsfehler auftreten, wenn eine Datei, wie zum Beispiel eine Eulumdat-Datei, für eine optische Verteilung erzeugt wird. Jedoch kann dieser Fehler durch entsprechende Erhöhung der Auflösung der Datei beliebig klein gemacht werden.

Für ein vorgegebenes Triple aus Beobachter 42, Testpunkten 20 und Positionen der Fahrwegbeleuchtungseinrichtungen 10, 12 ist die Beziehung zwischen einer Lichtstärke I und der beobachteten Leuchtdichte L gegeben durch

$$L = rI \qquad\qquad r = r(\tan\varepsilon, \beta) \qquad (1)$$

wobei r eine Funktion eines Einfallswinkels ε und einem Ergänzungswinkel β ist (vergleiche auch Fig. 2).

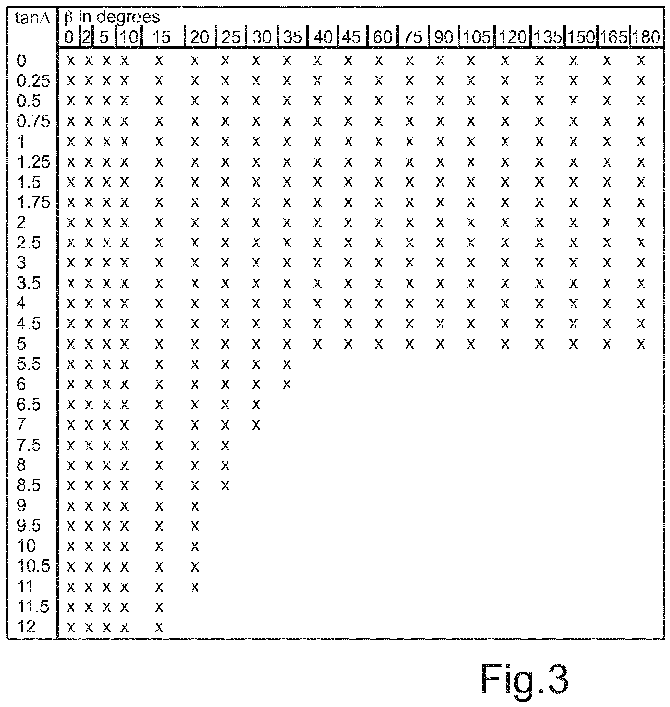

Die Norm EN-13201 definiert r-Tabellen, welche aufgelistete Werte von r für verschiedene Kombinationen von ε mit β umfasst (vergleiche auch Fig. 3). Aus Zweckmäßigkeitsgründen nutzt die Norm EN-13201 in den r-Tabellen tan ε, was einfach einem horizontalen Abstand zwischen dem jeweiligen Testpunkt 20 und der Verkehrswegbeleuchtungseinrichtung 10, 12 entspricht, gemessen in Radiant. Die r-Tabellen enthalten keine Werte für tan ε > 12 sowie auch für viele andere Wertpaarungen von tan ε und β. Innerhalb dieser Grenzen beschreibt die Norm EN-13201 ein komplexes Interpolationsschema. Außerhalb dieser Grenzen wird r als null definiert.

Für die Zwecke der Erfindung ist es jedoch wichtiger, das Verhältnis von der beobachteten Leuchtdichte L in Bezug auf die Beleuchtungsstärke auf der Straße 14 E und nicht die Lichtstärke I zu kennen. Diese Beziehung ist gegeben durch

$$L = qE \qquad\qquad q = \frac{rH^2}{(\cos\varepsilon)^3} \qquad (2)$$

wobei H eine Höhe der Verkehrswegbeleuchtungseinrichtung 10, 12 oberhalb der Fahrbahnoberfläche 22 des Verkehrswegs 14 ist.

Es gibt einen guten Grund für die Norm EN-13201, Fahrbahnoberflächenstreueigenschaften durch r-Werte zu spezifizieren. Typischerweise sind Straßenlichtverteilungen durch Intensitätsverteilungen, zum Beispiel durch Eulumdat-Dateien, gegeben, weshalb eine Nutzung der r-Tabellen zu einer direkteren Berechnung der Beleuchtungsstärke L bei Straßenbeleuchtungssimulationen führt. Die Beschreibung durch Terme von q hat jedoch den Vorteil, lediglich eine andere Bezeichnung zu sein für Bidirectional Reflectivity Distribution Function (BRDF), die gewöhnlich benutzte Größe zum Modellieren der Streueigenschaften von Oberflächen bereitzustellen. Die graphische Visualisierung von q und r als Funktion einer Testpunktposition für einen bestimmten Beobachter 42 und eine bestimmte Position der Verkehrswegbeleuchtungseinrichtung 10, 12 zeigt, dass, während r sich an einer Grenze eines genormten Musters gut an null annähert, Werte von q als Funktion einer Position stark diskontinuierlich an den r-Tabellen-Grenzen sind, insbesondere in Bezug auf Nahvorwärtsstreurichtungen, die besonders wichtig für eine effiziente Erzeugung einer Beleuchtung sind. Die Diskontinuität von q wirft Fragen bezüglich der Genauigkeit von Simulationsergebnissen gemäß der Norm EN-13201 auf, und zwar für Fahrwegbeleuchtungseinrichtungen mit stark asymmetrischen Intensitätsverteilungen. Die vorliegende Patentanmeldung befasst sich nicht mit diesen Fragen, sondern richtet sich auf die Optimierung der Verteilungen, die gemäß der vorgenannten Norm EN-13201 evaluiert werden.

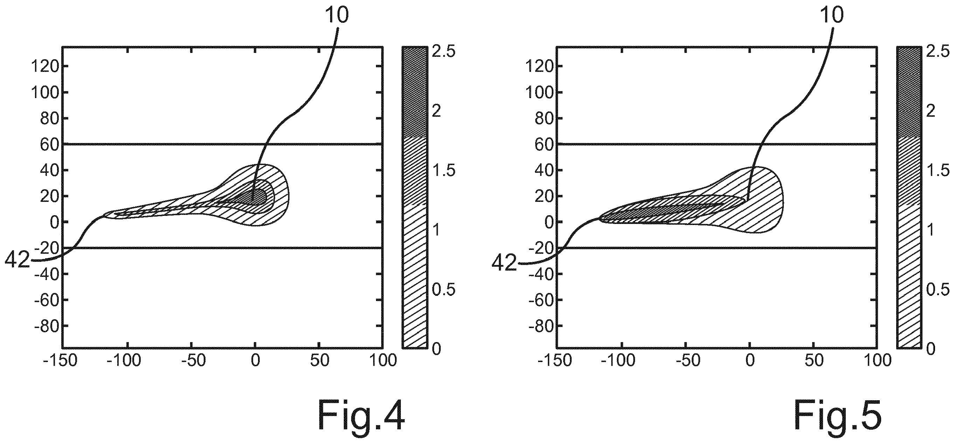

Die Fig. 4 und 5 schematisch Diagramme für r (Fig. 4) und q (Fig. 5) für eine R3-Oberfläche als Funktion einer Testpunktposition auf dem Verkehrsweg 14. Eine Abszisse in den Fig. 4 und 5 bezeichnet eine x-Position und eine linke Ordinate eine y-Position. Eine Beobachterposition ist in beiden Diagrammen bei (x, y) = (-120, 5) vorgesehen, wobei eine Position der Verkehrswegbeleuchtungseinrichtung 10, 12 bei (x, y) = (0, 20) 5m oberhalb der Verkehrswegoberfläche 22 vorgesehen ist. Die Grauwerte geben im logarithmischen Maßstab die Werte für r und q an. Der Maßstab ist in den Fig. 4 und 5 jeweils links neben dem Diagramm positioniert. Es ist anzumerken, dass das diskontinuierliche Verhalten von q an den Definitionsgrenzen, insbesondere bei Vorwärtsstreurichtungen, auftritt, welche die wichtigsten Richtungen für eine effiziente Ermittlung der Leuchtdichte sind.

Für die Berechnung der beobachteten Leuchtdichte $L_i$ an einem bestimmten Testpunkt, der durch den Index i gekennzeichnet ist, werden die Beiträge von allen Verkehrswegbeleuchtungseinrichtungen 10, 12 aufaddiert, die nahe genug bezüglich des Testpunkts 20 sind, um von null abweichende r-Werte beizutragen,

$$L_i = \sum_{l=1}^{n} L_{i,l} = \sum_{l=1}^{n} r(\tan\varepsilon_{i,l}, \beta_{i,l}) I_{i,l} = \sum_{i=l}^{n} q(\tan\varepsilon_{i,l}\beta_{i,l}) E_{i,l} \qquad (3)$$

wobei die Summation über beitragende Verkehrswegbeleuchtungseinrichtungen 10, 12 ausgeführt wird.

Darüber hinaus sollte ein Wartungsfaktor MF (englisch: maintenance factor) berücksichtigt werden, der eine Degradation des Leuchtmittels über die Zeit berücksichtigt. Dieser Wert kann gewöhnlich zum Beispiel einen Wert von 1,0, 0,9 oder 0,8 annehmen. Am Ende der Lebensdauer des Leuchtmittels ist der gesamte Lichtstrom der Verkehrswegbeleuchtungseinrichtung auf einen Wert gefallen, der dem Wartungsfaktor in Bezug auf einen Initialwert entspricht. Einige Spezifikationen der Norm EN-13201 beziehen sich auf Lichtstrom am Ende der Lebensdauer, wohingegen andere Spezifikationen sich auf den initialen Lichtstrom beziehen.

Die mittlere Leuchtdichte $L_{av}$ ist einfach durch das arithmetische Mittel von individuellen Werten der Leuchtdichte L für alle Testpunkte 20 innerhalb des Bereichs der Berechnung gebildet:

$$L_{av} = \frac{1}{m}\sum_{i=1}^{m} L_i \qquad\qquad (4)$$

Der Index i bezieht sich dabei auf die Testpunkte 20. Dabei ist anzumerken, dass es nicht eine einzige mittlere Leuchtdichte gibt, sondern dass die Leuchtdichte $L_{av}$ für jeden Beobachter 42 separat berechnet werden muss, das heißt, für jeden Beobachter 42 pro Fahrbahn 44, 46. Darüber hinaus sollte beachtet werden, dass die mittlere Leuchtdichte $L_{av}$ unter Berücksichtigung des Wartungsfaktors MF, das heißt, am Ende der Lebensdauer des Leuchtmittels, ermittelt werden sollte. Für eine Leuchtklasse ME1 der Norm EN-13201 sollte die mittlere Leuchtdichte $L_{av} \geq 2{,}0$ cd/m$^2$ für jeden Beobachter 42 sein.

Eine Gesamtgleichförmigkeit $U_0$ ist definiert als Verhältnis zwischen der niedrigsten beobachteten Leuchtdichte $L_{min}$ an irgendeinem der Testpunkte 20 im Bereich der Kalkulation im Verhältnis zu der mittleren Leuchtdichte $L_{av}$:

$$U_0 = \frac{L_{min}}{L_{av}} = \frac{\min_i(L_i)}{L_{av}} \qquad\qquad (5)$$

Es ist anzumerken, dass die Gesamtgleichförmigkeit $U_0$ nicht vom Wartungsfaktor MF abhängt und dass die Gesamtgleichförmigkeit $U_0$ für jeden Beobachter 42 einen eigenen Wert aufweist. Für die Leuchtklasse ME1 sollte $U_0 \geq 0{,}4$ für jeden Beobachter 42 sein.

Für eine Gleichförmigkeit in Längsrichtung 34 werden nur Testpunkte 20 entlang eines Zentrums der Beobachterfahrbahn 44, 46 berücksichtigt. Die Gleichförmigkeit in Längsrichtung 34 $U_l$ ist definiert als Verhältnis zwischen der niedrigsten beobachteten Leuchtdichte Lmin bei irgendeinem der Testpunkte 20 zu der höchsten beobachteten Leuchtdichte $L_{max}$ an irgendeinem der Testpunkte 20:

$$U_l = \frac{L_{min}}{L_{max}} = \frac{\min_i(L_i)}{\max_i(L_i)} \qquad\qquad (6)$$

Es ist anzumerken, dass die Gleichförmigkeit in Längsrichtung $U_l$ nicht vom Wartungsfaktor MF abhängt. Zusätzlich ist für jeden Beobachter 42 ein eigener Wert für die Gleichförmigkeit in Längsrichtung $U_l$ vorhanden. Für die Lichtklasse ME1 sollte $U_l \geq 0{,}7$ für jeden Beobachter 42 sein. $U_l$ ist vorzugsweise in entlang einer Mittellinie der Straße 14 bestimmt.

Eine weitere Größe ist die Schwellwertsteigerung (englisch: threshold increment) *TI*, welche einen prozentualen Anstieg in der Leuchtdichtedifferenz angibt, die erforderlich ist, ein Ziel bei Anwesenheit von Blendung sichtbar zu machen im Unterschied dazu, wenn das Ziel ohne Blendung sichtbar ist. Zu diesem Zweck wird eine Schleierleuchtdichte $L_{veil}$ verwendet, um den Effekt zu beschreiben, dass Licht von außerhalb einer Sichtlinie im Auge gestreut wird, welches den Kontrast reduziert. Dies ist gemäß der EN-13201 definiert durch

$$L_{veil} = 10\sum_{k=1}^{n} \frac{E_k}{\theta_k^2} \qquad\qquad (7)$$

Hier wird angenommen, dass der Beobachter 42, der 1,5m oberhalb der Straßenoberfläche 22 ist, gerade nach vorne auf ein Ziel blickt, welches 1° unterhalb des Horizonts ist. Die k-te Verkehrswegbeleuchtungseinrichtung 10, 12 trägt eine Beleuchtungsstärke $E_k$ zu einer Ebene bei, die rechtwinklig zur Sichtlinie des Beobachters 42 ist. Ein Winkel $\Theta_k$ bezeichnet einen Winkel zwischen der Sichtlinie und einer Linie vom Beobachter 42 zur k-ten Verkehrswegbeleuchtungseinrichtung 10, 12.

Verkehrswegbeleuchtungseinrichtungen 10, 12, die näher als 500m sind, werden angesehen, zur Schleierleuchtdichte $L_{veil}$ beizutragen. In der vorgenannten Norm EN-13201 wird die Annahme getroffen, dass eine Summation über k beendet werden soll, wenn eine entsprechende Fahrwegbeleuchtungseinrichtung weniger als 2% zur Gesamtschleierleuchtdichte der vorhergehenden Verkehrswegbeleuchtungseinrichtungen 10, 12 beiträgt. Im Folgenden wird von dieser Annahme jedoch abgesehen, um Diskontinuitäten zu vermeiden. Deshalb wird bei leichtem Überschätzen von *TI* bei einer vorgegebenen Verteilung auf der sicheren Seite verblieben. Ebenso sollen Verkehrswegbeleuchtungseinrichtungen 10, 12 oberhalb einer Sichtebene von der Ermittlung der Schleierleuchtdichte $L_{veil}$ ausgeschlossen werden, welche Sichtebene 20° gegenüber der Horizontalen geneigt ist und durch das Auge des Beobachters 42 ragt und die Straße 14 in Querrichtung 38 schneidet. Es wird darauf hingewiesen, dass die Schleierleuchtdichte $L_{veil}$ bei initialen Lichtströmen evaluiert wird.

Um die Schwellwerterhöhung *TI* zu ermitteln, wird die mittlere Leuchtdichte verglichen mit der Schleierleuchtdichte $L_{veil}$ unter Nutzung der Formel

$$TI = 65 L_{veil} \left( \frac{MF}{L_{av}} \right)^{0,8} \% \qquad (8)$$

In der Ermittlung ist der Wartungsfaktor enthalten, um die mittlere Leuchtdichte auf ihren initialen Lichtstromwert zu bringen.

Die Norm EN-13201 setzt jeden Beobachter 42 der Fahrbahn 44, 46 initial auf eine Längsposition von 2,75m (H-1,5m) vor die erste Verkehrswegbeleuchtungseinrichtung 10, 12, wobei H die Höhe der Verkehrswegbeleuchtungseinrichtung 10, 12 über der Straßenoberfläche 22 ist. Dies berücksichtigt cot(20°), wobei die erste Fahrwegbeleuchtungseinrichtung gerade unter der 20°-Ebene ist und deshalb zur Schleierleuchtdichte $L_{veil}$ beiträgt. Sodann wird der Beobachter 42 vorwärts bewegt in diskreten Schritten, die die gleichen in Bezug zur Nummer und zum Abstand wie die sind, die für die Längsabstände der Testpunkte 20 genutzt werden. Für jede Beobachterposition, wird das Feld für die Berechnung der mittleren Leuchtdichte entsprechend bewegt, sodass das Feld für die Berechnung immer 60m vor dem Beobachter 42 beginnt.

Anhand der folgenden Darstellung eines Arbeitsablaufes soll der Sachverhalt weiter verdeutlicht werden:

- Für jede Fahrbahn 44, 46 wird im Zentrum der Fahrbahn 44, 46 ein Beobachter 42 gesetzt, und zwar 2,75m (H-1,5m) in Längsrichtung 34 vor der ersten Verkehrswegbeleuchtungseinrichtung 10, 12,
- Berechnen der Schleierleuchtdichte $L_{veil}$ für diesen Beobachter 42 gemäß Gleichung 7, wobei die 500m-Grenze und die 20°-Sichtebene berücksichtigt werden,
- Anordnung eines Berechnungsbereichs der gleichen Größe und mit dem gleichen Testpunktabstand in 60m vor dem Beobachter 42 in Längsrichtung 34 und Evaluieren der mittleren Leuchtdichte $L_{av}$ auf den hierdurch gebildeten Testpunktgitter gemäß Gleichung 4,
- Berechnen der Schwellwerterhöhung *TI* für diesen Beobachter 42 gemäß Gleichung 8,
- Vorwärtsbewegen des Beobachters 42 in die Längsrichtung 34 über die gleiche Distanz, die zur Beabstandung der Testpunkte 20 in die Längsrichtung 34 genutzt wird und entsprechendes Fortbewegen des Berechnungsbereichs,
- Berechnen der Schwellwerterhöhung für diese neue Beobachterposition und Wiederholen der vorhergehenden Schritte, um die gleichen relativen Längspositionen abzudecken, die in dem Testpunktgitter vorhanden sind,
- Wiederholen des vorgenannten Verfahrens für jede Fahrbahn 44, 46 und
- Auswählen des maximalen Wertes der zuvor ermittelten Werte für die Schwellwerterhöhung als operativen Wert für die Schwellwerterhöhung *TI*.

Gemäß der Norm EN-13201 ist ferner das Umgebungsbeleuchtungsstärkeverhältnis SR vorgesehen, wobei zwei Streifen außerhalb der Fahrbahn 44, 46 neben den Fahrbahnrand 40 gesetzt werden, deren Breiten entweder 5m oder der halben Straßenbreite entsprechen, je nachdem, was schmaler ist, sowie zwei Streifen der gleichen Größe gerade innerhalb der Straße 14. Das Umgebungsbeleuchtungsstärkeverhältnis (englisch: surround ratio) SR ist dann definiert als das Verhältnis einer mittleren äußeren Beleuchtungsstärke zu einer mittleren inneren Beleuchtungsstärke. Da alle Streifen die gleiche Fläche aufweisen, kann das

Umgebungsbeleuchtungsstärkeverhältnis durch die folgende Gleichung angegeben werden:

$$SR = \frac{\Phi_{out,1} + \Phi_{out,2}}{\Phi_{in,1} + \Phi_{in,2}} \qquad (9)$$

Aus der Gleichung ist ersichtlich, dass es lediglich eine einzige Zahl als Ergebnis gibt und unterschiedliche Beobachter 42 nicht berücksichtigt werden. Es ist anzumerken, dass die Norm EN-13201 keine Beschränkungen für die Gleichförmigkeit des Lichts innerhalb dieser Streifen setzt. Jedoch wird ein Nutzer erwarten, dass die Homogenität nicht zu schlecht ist.

Auch wenn sich die Norm hinsichtlich ihrer Anwendung bei Straßenbeleuchtungen bewährt hat, so besteht dennoch Verbesserungsbedarf. Die Norm EN-13201 stellt auf einzelne Testpunkte 20 auf der Straße 14 ab, an denen eine bestimmte Beleuchtungsstärke erfasst wird. An den Zwischenstellen zwischen den Testpunkten 20 kann die Beleuchtung daher beliebig variieren. Dies hat den Nachteil, dass die mittels einer gattungsgemäßen Verkehrswegbeleuchtungseinrichtung 10, 20 erreichte Beleuchtung eines Verkehrswegs 14 zwar die Norm EN-13201 erfüllt, zugleich jedoch trotzdem eine für den bestimmungsgemäßen Betrieb ungünstige Ausleuchtung zur Folge haben kann.

Es ist deshalb die Aufgabe der Erfindung, dies zu verbessern.

Die Spezifikation der Norm EN-13201 bezieht sich auf Leuchtdichtewerte ausschließlich an bestimmten Testpunkten 20 der Straße 14, jedoch nicht über eine große Fläche. Als Gedankenexperiment kann beispielsweise angenommen werden, dass die Verkehrswegbeleuchtungseinrichtung 10, 12 aus einer Anordnung von Laserlichtquellen besteht, wobei jede Laserlichtquelle einen exakten Lichtpunkt an genau einem jeweiligen Testpunkt 20 erzeugt. Ein solches System würde formal die Anforderungen der Norm EN-13201 erfüllen, wobei jedoch lediglich ein insgesamt sehr kleiner Lichtstrom erzeugt werden würde, da der größte Teil der zu beleuchtenden Fläche der Straße 14 dunkel wäre. Die Norm EN-13201 scheint daher vorauszusetzen, dass die Intensität von Verkehrswegbeleuchtungseinrichtungen 10, 12 und demzufolge die Beleuchtungsstärke und die Leuchtdichte auf der Straße 14 sich lediglich mit einer gewissen Glattheit ändern. Diese Glattheit muss bei der Parametrisierung der Verteilung in Betracht gezogen werden. Wenn die Verteilung mit Werten bezogen auf ein sehr feines Gitter parametrisiert werden, könnte eine Optimierungsroutine, die den Gesamtlichtstrom minimiert, eine optimale Verteilung ermitteln, die dem vorgenannten hypothetischen Lasersystem recht nahe kommt. Die Beschreibung der Lichtverteilung sollte deshalb zumindest so grob wie der Testpunktabstand sein.

Als zu parametrisierende Größe wird gemäß der Erfindung die Beleuchtungsstärke auf der Straße 14 anstelle der Lichtstärke der Verkehrswegbeleuchtungseinrichtung 10, 12 herangezogen. Die letztere kann einfach von der vorhergehenden abgeleitet werden, aber die Regularität der Verteilung ist in rechteckigen Formen auf der Straße 14 gegeben anstelle von regulären Bereichen im räumlichen Koordinatensystem der Lichtstärke. Um das Koordinatensystem der Beleuchtungsstärkenverteilung zu definieren, wird an ein rechtshändiges kartesisches Koordinatensystem genutzt, wobei die Verkehrswegbeleuchtungseinrichtung 10, 12 auf einer Höhe z=H über dem Ursprung ist und die x- und die y-Achsen in die Längsrichtung 34 und in die Querrichtung 38 entsprechend ausgerichtet sind. Dies wird im Folgenden als "lokales Koordinatensystem" bezeichnet entgegen zu der Bezeichnung "globales Koordinatensystem", welches aktuelle Punkte auf der Straße 14 beschreibt.

Das lokale Koordinatensystem ist ein Konzept ähnlich zu dem sphärischen Koordinatensystem, welchem zum Beschreiben der Lichtstärke genutzt wird, wobei jedoch zu beachten ist, dass beide Koordinatensysteme durch die Werte x, y und z gegeben sind, wobei zu beachten ist, diese voneinander zu unterscheiden. Wenn es im Folgenden nicht weiter angegeben ist, um welches der Koordinatensysteme es sich handelt, sind im Folgenden die Indizes mit g für ein globales Koordinatensystem gekennzeichnet. Die zu parametrisierende Größe ist deshalb die Beleuchtungsstärke als Funktion von lokalen Koordinaten,

$$E : R^2 \mapsto R_0^+, \qquad (x_l, y_l) \rightarrow E(x_l, y_l) \qquad (10)$$

Um die Anforderung der Glattheit berücksichtigen zu können, werden die Werte von der Beleuchtungsstärke E an vorgegebenen Punkten x auf einem rechteckigen aber nicht äquidistanten Gitter 24 fixiert:

$$\vec{x}_{i,j} = (x_i, y_j)$$
$$i = 1 \ldots n, j = 1 \ldots m \qquad (11)$$
$$x_{i|} < x_{i+1}, y_j < y_{j+1}$$
$$E_{i,j} = E(x_i, y_j)$$

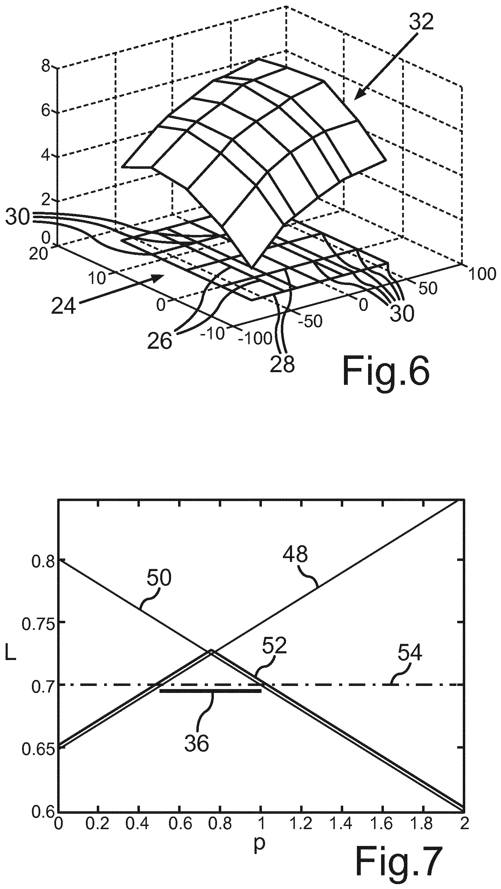

Für Punkte 30 in diesem Gitter 24 wird die Beleuchtungsstärke E ermittelt durch bilineare Interpolation, wie im Folgenden angegeben. Für Punkte außerhalb dieses Gitters 24 wird die Beleuchtungsstärke E zu null gesetzt. An einem Beispiel soll dies weiter erläutert werden, welches in Fig. 6 dargestellt ist. In der Darstellung in Fig. 6 ist in einem schematischen dreidimensionalen Diagramm eine bilineare Interpretation auf einem Gitter 24 dargestellt, welches rechteckig aber nicht äquidistante Gitterpunkte 30 aufweist. Es gelten die folgenden Bedingungen:

$$x_i \leq x \leq x_{i+1}, \quad y_j \leq y \leq y_{j+1}$$

$$u = \frac{x - x_i}{x_{i+1} - x_i}, \quad v = \frac{y - y_j}{y_{j+1} - y_j} \Rightarrow u, v \in [0,1]$$

$$E(x,y) = (1-u)(1-v)E_{i,j} + \qquad (12)$$
$$u(1-v)E_{i+1,j} +$$
$$(1-u)vE_{i,j+1} +$$
$$uvE_{i+1,j+1}$$

Es ist nützlich, nicht die Beleuchtungsstärke durch $E_{i,j}$ direkt zu parametrisieren. Stattdessen kann die Verteilung durch k unabhängige freie Parameter beschrieben werden, die einen Parametervektor $\vec{p} \in R^k$, auf deren Basis $E_{i,j}$ linear abhängig ist. Auf dieser Basis wird die Matrix $E_{i,j} \in R^{nxm}$ in einen Vektor $\vec{E} \in R^{(n^*m)}$ umgeformt, und durch eine lineare Zuordnung durch eine Matrix P beschrieben,

$$\vec{E} = P\vec{p} \qquad (13)$$

Dieser Ansatz eröffnet später eine große Flexibilität beim Definieren der Verteilung, wobei die Implementation der Leuchtdichtenberechnung unverändert bleibt, was zum Optimieren der Performance benötigt wird. Jede Zeile von P beschreibt einen Beleuchtungsstärkewert $E_{i,j}$ als Linearkombination von freien Parametern $\vec{p}$, und jede Spalte der Matrix P beschreibt, wie sich die Verteilung mit dem entsprechenden einzelnen freien Parameter ändert. Dies wird auch Basisfunktion genannt. Einige erdenkliche Vorteile sind:

- Um die Beleuchtungsstärkewerte $E_{i,j}$ an den Kanten des Gitters zu null zu setzen, damit die Verteilung nach außen glatt verläuft, können einfach die entsprechenden Zeilen von P zu null gesetzt werden.
- Um zum Beispiel bestimmte Beleuchtungsstärkewerte $E_{i,j}$ auf Beleuchtungsstärkenwerte $E_{i,j+1}$ zu setzen, damit ein Längsmuster in die Querrichtung 38 wiederholt werden kann, können die entsprechenden Zeilen gleichgesetzt werden.
- Um die Verteilung von einem willkürlichen Satz von aus Basisfunktionen, wie zum Beispiel Fourier-Polynome, Gauß-Verteilungen oder dergleichen, mit unterschiedlichen Breiten und Zentren, zusammenzusetzen, damit eine bestimmte gewünschte Glattheit sichergestellt ist, können Spalten von P zu den entsprechenden individuellen Basisfunktionen an den Punkten $(x_i, y_j)$ gesetzt werden.
- Wenn es gewünscht ist, die gesamte Optikeinheit aus einer kleinen Anzahl von individuellen Elementen zusammenzustellen, beispielsweise Linsen, Prismen, Spiegel und/oder dergleichen, können als Basisfunktionen die individuellen Verteilungen der einzelnen Elemente genutzt werden. In diesem Fall sind die freien Parameter die Anzahl jedes der optischen Elemente.
- Um eine Symmetrie in die Längsrichtung 34 zu erzwingen, zum Beispiel um die gleiche Verkehrswegbeleuchtungseinrichtungen 10, 12 für die linke und die rechte Fahrwegseite nutzbar zu machen, sollte $x_i$ symmetrisch null sein, das heißt, $x_i = -x_{n-i+1}$. Dadurch ist lediglich ein kleinerer Satz von freien Parametern $\vec{p}_{sym}$ erforderlich, um lediglich eine Seite der Verteilung zu beschreiben, wobei die andere Seite der Verteilung dadurch gespiegelt wird, dass die entsprechenden Zeilen von P $(x_i, y_j)$ und $(x_{n-i+}, y_j)$ gleichgesetzt werden.
- Wenn eine Parametrisierung bereits existiert, das heißt, die Basisfunktionen und die Gitterpunkte 30 gewählt sind, und wobei die gewählten Basisfunktionen entweder aus sich selbst heraus symmetrisch sind oder eine symmetrische Partnerfunktion aufweisen, kann diese Implementation dadurch erweitert werden, dass die existierende Matrix P mit einer Matrix multipliziert wird, die $\vec{p}_{sym}$ zu $\vec{p}$ transformiert.

Zusammengefasst kann die Parametrisierung durch die folgenden Schritte erreicht werden:

- Definieren eines rechteckigen Gitters 24 aus Gitterpunkten 30 $(x_i, y_j)$ in lokalen Koordinaten, wobei die Gitterpunkte 30 nicht notwendigerweise äquidistant sein brauchen, wobei sich das rechteckige Gitter 24 über den gesamten Bereich 36 erstreckt, indem es Sinn macht, Licht auszusenden. Praktisch bedeutet dies, dass in die Längsrichtung 34 die Verteilung auf +/-12H begrenzt werden kann, weil r außerhalb dieser Grenze null ist und es nicht effizient ist, Licht in einen Bereich auszusenden, in dem keine Beleuchtungsstärke gemäß der Norm EN-13201 erzeugt werden braucht. In die Querrichtung 38 kann die Verteilung auf die Kanten 40 der äußeren Streifen begrenzt werden, an denen das Umgebungsbeleuchtungsstärkeverhältnis evaluiert ist. Dies erfordert Informationen über einen Überhang, das heißt, eine Querposition der Verkehrswegbeleuchtungseinrichtung 10, 12 in globalen Koordinaten.

- Außerhalb des $(x_i, y_j)$-Bereichs ist die Beleuchtungsstärke als Funktion von lokalen Koordinaten E(x,y) 0 und ist im Übrigen innerhalb der bilinearen Interpolation 32 ermittelt unter Verwendung der benachbarten Werte der Beleuchtungsstärke $E_{i,j}$.

- Um eine gewisse Freiheit bei der Auswahl der freien Parameter zu haben, kann die Matrix $E_{i,j}$ in einen Vektor $\vec{E}$ umgeformt werden, der von einem bestimmten Satz von freien Parametern $\vec{p}$ linear abhängig ist gemäß $\vec{E} = P\vec{p}$.

- Eine Symmetrie, die Glattheit sowie ein Auslaufen auf null an den Kanten 40 und andere vorteilhafte Merkmale der Verteilung können durch geeignete Wahl von der Matrix P sichergestellt werden.

Da es ein Ziel ist, den gesamten Lichtstrom zu minimieren, wird die folgende Gütefunktion genutzt:

$$\Phi = \int_{x_1}^{x_n} \int_{y_1}^{y_m} E(x, y)\,dxdy \qquad (14)$$

Um zu sehen, wie $\Phi$ von den freien Parametern $\vec{p}$ abhängt, wird die Integration als Summe über die individuellen Gitterrechtecke zusammengesetzt:

$$\begin{aligned}
\Phi(\vec{p}) &= \sum_{i=1}^{n-1}\sum_{j=1}^{m-1} \int_{x_i}^{x_{i+1}} \int_{y_j}^{y_{j+1}} E(x, y)\,dxdy \\
&= \sum_{i=1}^{n-1}\sum_{j=1}^{m-1} \int_0^1 \int_0^1 [(1-u)(1-v)E_{i,j} + u(1-v)E_{i+1,j} \\
&\quad + (1-u)vE_{i,j+1} + uvE_{i+1,j+1}\,](x_{i+1} - x_i)(y_{j+1} - y_j)\,dudv \qquad (15) \\
&= \sum_{i=1}^{n-1}\sum_{j=1}^{m-1} \frac{A_{i,j}}{4}\left(E_{i,j} + E_{i+1,j} + E_{i,j+1} + E_{i+1,j+1}\right) \\
&= \hat{\omega}_\Phi \vec{E} = \hat{\omega}_\Phi P\vec{p} \\
&= \omega_\Phi \vec{p}
\end{aligned}$$

Wobei ein geeigneter Gewichtsfaktorvektor $\hat{\omega}_\Phi$ all die Koeffizienten in der Summation sammelt, und wobei $\omega_\Phi = \hat{\omega}_\Phi P$ direkt die gewünschte Gütefunktion definiert, bei der der gesamte Lichtstrom als Linearkombination von den freien Parametern erhalten wird. Diese Linearität der Gütefunktion ist ein wichtiger Aspekt, um das Schema der bilinearen Interpolation 32 für die Beleuchtungsstärke E (x, y) zu wählen und die Linearität zwischen $\vec{p}$ und $\vec{E}$ aufzuzwingen. Die lineare Gütefunktion macht nicht nur die nummerische Optimierung einfacher. Wenn die Nebenbedingungen die konvexe Grenze des erlaubten Parameterbereichs definieren, garantiert eine lineare Gütefunktion auch, dass, wenn die Algorithmen ein lokales Optimum in dem erlaubten Bereich finden, dieses lokale Optimum zugleich auch ein globales Optimum darstellt.

Außer für das Umgebungsbeleuchtungsstärkeverhältnis verwenden alle Randbedingungen, die von der Norm EN-13201 gefordert sind, die beobachtete Leuchtdichte L $(x_g, y_g)$ an einem jeweiligen Testpunkt $(x_g, y_g)$ 20 als Basiseingabe. Wie aus Gleichung (3) ersichtlich ist, ist es zunächst erforderlich, zu ermitteln, welche Verkehrswegbeleuchtungseinrichtungen 10, 12 aktuell zur beobachteten Leuchtdichte an einem vorgegebenen Testpunkt 20 beitragen. Während die Norm EN-13201 vorgibt, dass alle Verkehrswegbeleuchtungseinrichtungen 10, 12 von -5H bis +12H in die Längsrichtung 34 und von -5H bis +5H quer dazu berücksichtigt werden sollen, kann für die Erfindung die Tatsache genutzt werden, dass die Beleuchtungsstärke (x, y)=0 außerhalb des $(x_i, y_j)$-Bereichs ist. Es können deshalb alle diejenigen Verkehrswegbeleuchtungseinrichtungen 10, 12 genutzt werden, deren globale Koordinaten $x_{lum}$, $y_{lum}$ die Bedingung $x_l < x_g - x_{lum} < x_n$ und $y_1 < y_g - y_{lum} < y_m$ erfüllen. Selbst wenn Verkehrswegbeleuchtungseinrichtungen 10, 12 dann noch einen Beitrag leisten würden, welcher außerhalb des vorgenannten Bereichs in der Norm EN-13201ist, verursacht dies keine falschen Ergebnisse, weil die q-Werte für diese Verkehrswegbeleuchtungseinrichtungen 10, 12 null wären. Es ist vorteilhaft für eine Programmschnittstelle für die nummerische Ermittlung, dass keine Informationen über die Lampenhöhe H an diesen Stellen erforderlich sind.

Dadurch kann nun die Gleichung (3) wie folgt erweitert werden:

$$L\big(x_g,y_g\big)=\sum_{l=1}^{n}q\big(\tan\varepsilon_l\beta_l\big)E\big(x_g-x_l,y_g-y_l\big)$$

$$=\sum_{l=1}^{n}q_l E(x_g-x_l,y_g-y_l)$$

$$=\sum_{l=1}^{n}q_l\big[(1-u_l)(1-v_l)E_{i,j}+(1-u_l)v_l E_{i,j+1} \qquad (16)$$

$$+u_l(1-v_l)E_{i+1,j}+u_l v_l E_{i+1,j+1}\big]$$

$$=\hat{\omega}_{x_g,y_g}\vec{E}=\hat{\omega}_{x_g,y_g}P\vec{p}$$

$$=\omega_{x_g,y_g}\vec{p}$$

wobei geeignete i, j, $u_l$ und $v_l$ sowie Gewichtsvektoren $\hat{\omega}_{xg,yg}$ und $\omega_{xg,yg}$ verwendet werden. Man erhält wieder L($x_g$, $y_g$) als eine Linearkombination der freien Parameter $\vec{p}$. Mit dieser Beziehung können nun Standardanforderungen als Randbedingungen auf $\vec{p}$ formuliert werden.

Für einen bestimmten Beobachter O 42 ist eine bestimmte Anzahl q von Testpunkten 20 $(x_i^o,y_i^o)$, i=l...q in globalen Koordinaten definiert durch die Norm EN-13201. Für diesen Beobachter 42 ist die mittlere Leuchtdichte $L_{av}{}^O$ gegeben durch:

$$L_{av}^o=\frac{1}{q}\sum_{i=1}^{q}L\big(x_i^o,y_i^o\big)=\left[\frac{1}{q}\sum_{i=1}^{q}\omega_{x_i^o,y_i^o}\right]\vec{p}=\omega_{av}^o\vec{p} \qquad (17)$$

wobei $\omega_{av}^o$ alle Komponenten der Summation über i sammelt. Die Norm fordert für jeden Beobachter 42 eine minimale mittlere Leuchtdichte $L_{av,min}$, die von der Lichtklasse abhängig ist, zum Beispiel für ME1, $L_{av,min}$=2,0 cd m$^2$. Diese Anforderung führt zu so vielen linearen Randbedingungen wie Beobachter 42 vorhanden sind:

$$\omega_{av}^o\vec{p}\geq L_{av,\min}\qquad\forall o \qquad\qquad (18)$$

Für den gleichen Beobachter 42 O und die gleichen q-Testpunkte 20 ( $(x_i^o,y_i^o)$, i=1...q in globalen Koordinaten ist die Gesamtgleichförmigkeit definiert als "Minimum über dem Mittelwert". Zwar sind diese skalaren Randbedingungen gleichförmig aber nicht überall differenzierbar als Funktion von $\vec{p}$ wie aus Fig. 7 ersichtlich ist. Fig. 7 zeigt in einem sehr vereinfachten Beispiel, bei dem nur ein freier Parameter und nur zwei Testpunkte vorgesehen sind, wie ein Satz linearer Randbedingungen von $U_0$ erzeugt werden kann. Während das individuelle $L_i/L_{av}$ linear in $\vec{p}$ ist, ist min($L_i$)kontinuierlich, insbesondere linear aber nicht differenzierbar bei p = 0,75, bei dem die Minimum-Rolle springt. Ebenfalls ist der mögliche Bereich 36 dargestellt. In dem Diagramm in Fig. 7 ist schematisch der Sachverhalt dargestellt. Aus der Abszisse sind Werte für p angegeben, wohingegen auf der Ordinate Werte für L angegeben sind. Ein Graph 48 stellt $L_1$(p)/$L_{av}$ dar. Ein Graph 50 stellt $L_2$(p)/$L_{av}$ dar. Ein Graph 52 stellt $U_0$ dar, und ein Graph 54 stellt $U_{0,min}$ dar. Mit 36 ist der mögliche Bereich gekennzeichnet.

Randbedingungen, die nicht differenzierbar sind, machen eine randbedingte Optimierung schwierig, wenn ein Optimierungsalgorithmus auf Gradienteninformationen beruht. Jedoch ist

$$\min\left(\frac{L\big(x_i^o,y_i^o\big)}{L_{av}^o}\right)\geq U_{0,\min}\quad\forall o\quad\Leftrightarrow\quad\frac{L\big(x_i^o,y_i^o\big)}{L_{av}^o}\geq U_{0,\min}\quad\forall o,i \qquad (19)$$

Diese Ungleichungen können auf der rechten Seite einfach in lineare Randbedingungen umgeformt werden:

$$L\big(x_i^o,y_i^o\big)-U_{0,\min}L_{av}^o\geq 0\quad\forall o,i$$

$$\omega_{x_i^o, y_i^o}\vec{p} - U_{0,\min}\omega_{av}^o\vec{p} \geq 0 \quad \forall o, i \qquad (20)$$

$$\omega_{U0}^{o,i}\vec{p} \geq 0 \quad \forall o, i$$

Auf diese Weise kann die einzige, nicht differenzierbare GesamtgleichförmigkeitsRandbedingung ersetzt werden durch einfaches Anfordern von so vielen linearen Randbedingungen pro Beobachter 42 wie Testpunkte 20 vorhanden sind. Dies erhöht die Anzahl der Randbedingungen, jedoch kann dadurch der Vorteil erreicht werden, dass nur lineare Randbedingungen vorhanden sind.

Diese Gleichförmigkeit in Längsrichtung $U_l$ kann auf sehr ähnliche Weise behandelt werden. Der Satz von Testpunkten 20 $\left(\widetilde{x}_i^o, \widetilde{y}_i^o\right)$, i=1...$\widetilde{q}$ für $U_l$ ist eine Untermenge von denen, die für die mittlere Leuchtdichte verwendet werden. Nur die Testpunkte 20 im Zentrum der gleichen Fahrbahn 44, 46 des Beobachters 42 werden berücksichtigt. Jedoch ist zu beachten, dass die Gleichförmigkeit in die Längsrichtung 34 definiert ist als Minimum über Maximum und nicht als über Minimum über Mittelwert, weshalb eine einzige lineare Randbedingung für alle Paare von Testpunkten 20 zu bilden ist.

$$\frac{\min\left(L\left(\widetilde{x}_i^o, \widetilde{y}_i^o\right)\right)}{\max\left(L\left(\widetilde{x}_i^o, \widetilde{y}_i^o\right)\right)} \geq U_{l,\min} \quad \forall o \quad \Leftrightarrow \quad \frac{L\left(\widetilde{x}_i^o, \widetilde{y}_i^o\right)}{L\left(\widetilde{x}_j^o, \widetilde{y}_j^o\right)} \geq U_{l,\min} \quad \forall o \quad i \neq j \qquad (21)$$

und - ähnlich wie bei der Gesamtgleichförmigkeit - kann eine Anzahl von linearen Randbedingungen erhalten werden:

$$L\left(\widetilde{x}_i^o, \widetilde{y}_i^o\right) - U_{l,\min}L\left(\widetilde{x}_j^o, \widetilde{y}_j^o\right) \geq 0 \qquad \forall o, \quad i \neq j$$

$$\omega_{\widetilde{x}_i^o, \widetilde{y}_i^o}\vec{p} - U_{l,\min}\omega_{\widetilde{x}_j^o, y_j^o}\vec{p} \geq 0 \qquad \forall o, \quad i \neq j \qquad (22)$$

$$\omega_{Ul}^{o,i,j}\vec{p} \geq 0 \qquad \forall o, \quad i \neq j$$

Dadurch sind die Randbedingungen für die Schwellwerterhöhung $Tl$ nunmehr einfach zu formulieren. Anstelle von einzeln nicht differenzierbaren max $(Tl_o(\vec{p})) < Tl_{\max}$, wie es in der Norm EN-13201 definiert ist, kann nunmehr einfach die untere Zeile von

$$Tl_o(\vec{p}) < Tl_{\max} \quad \forall o$$

$$65L_{veil}^o(\vec{p}) - MF^{-0,8}Tl_{\max}L_{av}^o(\vec{p})^{0,8} \geq 0\% \qquad (23)$$

genommen werden, wobei O nun über die vielen speziellen Beobachterpositionen, die für die Schwellwerterhöhung erforderlich sind, iteriert wird.

Jedoch ist aufgrund des Exponenten von 0,8 keine Möglichkeit gegeben, lineare Randbedingungen zu kreieren. Die Schwellwerterhöhung $Tl$ ist deshalb nichtlinear. Sobald die Schwellwerterhöhung $Tl$ berücksichtigt werden soll, um eine optimale Verteilung zu ermitteln, muss man nicht nur Optimierungsalgorithmen verwenden, die nichtlineare Randbedingungen handhaben können. Es sind auch all die konzeptionellen Komplikationen zu behandeln, die nichtlineare Randbedingungen mit sich bringen. Ohne weitere Informationen über die Struktur der Schwellwerterhöhung $Tl$ ist die Situation wie folgt:

- Es kann davon ausgegangen werden, dass das Optimum an der Grenze des betrachteten Bereichs 36 liegen muss. Beweis: Aufgrund der Linearität der Gütefunktion ist der Gradient der Gütefunktion eine von null abweichende Konstante und ein Optimum innerhalb des betrachteten Bereichs würde einen verschwindenden Gradient erfordern.
- Wenn das Optimum des Problems, welches mit den gleichen Randbedingungen gefunden wurde, aber die Schwellwerterhöhung außer Acht lässt, nicht die Randbedingungen bezüglich der Schwellwerterhöhung $Tl$ verletzt, ist es also ein globales Optimum des gesamten Problems, welches auch die Schwellwerterhöhung $Tl$ einschließt. Beweis: Es ist bekannt, dass ein lineares Problem mit linearen Nebenbedingungen nur ein einziges globales Optimum aufweist und keine lokalen Optima, welches der beste Funktionswert über den gesamten betrachteten Bereich des linearen Problems ist. Um einen besseren Wert erhalten zu können, wäre eine Ausweitung des betrachteten Bereichs 36 erforderlich. Jedoch folgt aus der Berücksichtigung der Schwellwerterhöhung *TI* exakt das Gegenteil: Dies kann nur die Größe des betrachteten Bereichs 36 reduzieren. In der Praxis ist dieses Ergebnis jedoch von geringer Bedeutung, weil zu einem Fahrer eines Fahrzeugs auf der Straße 14 gerichtetes Blendlicht sehr wahrscheinlich eine sehr wirksame Leuchtdichte erzeugt wegen der Vorwärtsstreueigenschaften der Straßenoberfläche 22.

- Darüber hinaus können viele lokale Minima der Gütefunktion vorhanden sein, wenn eine Form der Schwellwerterhöhung *TI* Grenzen des betrachteten Bereichs wellenförmig ist. Selbst wenn ein Optimierungsalgorithmus ein Optimum finden würde, wäre man nicht sicher, ein globales Minimum aufgefunden zu haben, so dass keine weiteren lokalen Minima mit einem deutlich geringeren Energieverbrauch vorhanden wären.

Deshalb ist es eine wichtige Frage, ob die Grenzen der Schwellwerterhöhung *TI* des betrachteten Bereichs wellenförmig sind. Glücklicherweise zeigt sich, dass dies nicht der Fall ist. Wie sich aus Anhang A ergibt, ist die Grenze der Schwellwerterhöhung *TI* in der Tat konvex. Deshalb ergibt sich, dass es dort kein lokales Minimum der Gütefunktion geben kann. Wenn die Optimierungsroutine ein Optimum findet, muss dieses Optimum an der Grenze des betrachteten Bereichs sein und es ist zugleich auch das einzige globale Optimum.

Auch die Randbedingung bezüglich des Umgebungsbeleuchtungsstärkeverhältnisses ist linear.

$$SR = \frac{\Phi_{out,1} + \Phi_{out,2}}{\Phi_{in,1} + \Phi_{in,2}} \geq SR_{\min}$$

$$\Phi_{out,1} + \Phi_{out,2} - SR_{\min}\left(\Phi_{in,1} + \Phi_{in,2}\right) \geq 0 \qquad (24)$$

$$\hat{\omega}_{SR}\vec{E} \geq 0$$

$$\omega_{SR}\vec{p} \geq 0$$

Neben einem minimalen Lichtstrom und durch die Norm erforderte Randbedingungen gibt es zusätzliche Anforderungen, die eine gute Verteilung erfüllen muss. Diese Anforderungen werden als zusätzliche Anforderungen der Optimierung zur Verfügung gestellt, um die passende Verteilung zu finden.

Auch wenn asymmetrische Verteilungen effizienter sind, kann aufgrund von Überlegungen zum Beispiel seitens des Marketing gefordert sein, Verkehrswegbeleuchtungseinrichtungen 10, 12 zu schaffen, die in die Längsrichtung 34 symmetrisch sind, zum Beispiel indem das gleiche Produkt für die linke Seite und die rechte Seite der Straße 14 eingesetzt werden kann. Für die Berechnungszeit ist es vorteilhaft, eine Symmetrie, wie oben bereits diskutiert, durch symmetrische Parametrisierung der Verteilung zu implementieren, beispielsweise $\vec{E}=P\vec{p}$ ist symmetrisch. Jedoch ist es auch möglich, Symmetrie durch zusätzliche Randbedingungen in Form von Gleichungen zu erzwingen:

$$E\left(x_1, y_i\right) - E\left(x_{n-i+1}, y_j\right) = 0 \quad \Leftrightarrow \quad \hat{\omega}_{sym}\vec{E} = \hat{\omega}_{sym}P\vec{p} = \omega_{sym}\vec{p} = 0 \qquad (25)$$

mit einem geeigneten Gewichtsvektor $\hat{\omega}_{sym}$ angewendet auf $\hat{\vec{E}}$, wobei der Randbedingungsvektor $\hat{\omega}_{sym}$ angewendet auf $\vec{p}$ vollständig durch $\omega_{sym} = \hat{\omega}_{sym}P$ berechnet werden kann.

Weder eine Gehäusegröße noch ein Leuchtmittel kann grundsätzlich vollständig frei gewählt werden. Statt dessen bestimmen mechanische und andere Überlegungen eine verfügbare Lichtaustrittsöffnung 16 hinsichtlich eines vorbestimmten Wertes und andere Überlegungen begrenzen die Auswahl der Quellen, welche in der Folge die verfügbare Quellenleuchtdichte begrenzen.

Die Beleuchtungsstärke E ist grundsätzlich bei einem bestimmten Punkt auf der Straße 14 gegeben durch Integrieren der Leuchtdichte des einfallenden Lichts L über einen beabsichtigten projizierten Raumwinkel $\Omega_P$ einer Halbsphäre $\Omega$ über der Straße,

$$E = \int_{\Omega} Ld\Omega_p \qquad (26)$$

angenommen eine Verkehrswegbeleuchtungseinrichtung 10, 12 mit einer ebenen Horizontalen nach unten gerichteten Lichtaustrittsöffnung 16 mit einer Fläche A bei einer Höhe H oberhalb der Straße 14. Das projizierte Raumwinkelelement $d\Omega_p$ ist definiert durch $d\Omega_p = \cos(\varepsilon)d\Omega$ mit Raumwinkelelement $d\Omega$. D ist der ausreichende horizontale Abstand der Verkehrswegbeleuchtungseinrichtung 10, 12, der auf die Straße 14 weist und $\varepsilon$ der Einfallswinkel. Ferner ist angenommen, dass das Leuchtmittel ein Lambert'sches Leuchtmittel in der Verkehrswegbeleuchtungseinrichtung 10, 12 mit einer

Leuchtdichte $L_s$ ist und Transmissions-/Reflexionsverluste in der Verkehrswegbeleuchtungseinrichtung 10, 12 vernachlässigt sind. Da die Leuchtdichte innerhalb der Verkehrswegbeleuchtungseinrichtung 10, 12 nicht ansteigen kann, kann deshalb die Beleuchtungsstärke E an einem beliebigen Punkt auf der Straße 14 nicht größer sein als

$$E_{\max} = \frac{L_s A}{H^2}\left(\frac{H}{H^2+d^2}^2\right)^2 = \frac{L_s A}{H^2}(\cos\varepsilon)^4 \qquad (27)$$

wobei $L_s A^2$ zugleich auch die maximal mögliche Lichtstärke I der Verkehrswegbeleuchtungseinrichtung 10, 12 in die Abwärtsrichtung ist.

Diese physikalische obere Grenze kann als obere Grenze von $\vec{E}$ implementiert werden, von welchem eine lineare Randbedingung auf $\vec{p}$ abgeleitet werden kann,

$$\vec{E} \le \vec{E}_{\max} \qquad (28)$$
$$-P\vec{p} \ge \vec{E}_{\max}$$

In der Praxis kann gewünscht sein, $\vec{E}_{\max}$ mit einem Faktor F<1 zu multiplizieren, weil E=$E_{\max}$ an einem vorgegebenen Punkt bedeutet, dass die gesamte sichtbare Lichtaustrittsöffnung von diesem Punkt aus gesehen aufleuchtend aussehen muss, wodurch eine harte Beschränkung in Bezug auf die optische Konstruktionsfreiheit gesetzt ist. Eine Verwendung von F=0,25 bedeutet zum Beispiel, dass nicht mehr als 25 Prozent der sichtbaren optischen Oberfläche zur Lichtstärke in die entsprechende Richtung beizutragen braucht.

Glattheit oder auch begrenzter Kontrast der erhaltenden Verteilung kann auf verschiedenen Wegen erzwungen werden:

Eine Möglichkeit besteht darin, die Auflösung in die Längsrichtung 34 der $x_i$-Positionen, die zum Parametrisieren der Verteilung genutzt werden, auf einen angemessenen Wert zu begrenzen. Gemessen im Abstand auf der Straße 14 macht es keinen Sinn für die Gitterpunkte 30, näher als die Testpunkte 20 auf der Straße zu sein. Bei großen Einfallswinkeln jedoch würde selbst dieser Abstand mit sehr kleinen Winkeln korrespondieren, was ebenfalls nicht aus Sicht eines tolerierenden Punktes in Bezug auf die Sicht gewünscht ist. Deshalb werden eine geringere Winkelgrenze und eine geringere Abstandsgrenze für die Auflösung gewählt. Dieser Ansatz reduziert ebenfalls stark die Anzahl K der freien Parameter, was sich als vorteilhaft für die Rechnerzeit erweist.

Eine zweite Möglichkeit sieht vor, dass der Querabstand dieser Positionen nicht nur nicht kleiner als der Testpunktabstand sein sollte. Aufgrund der unterschiedlichen Funktionen der Testpunkte 20 auf und jenseits des Fahrbahnzentrums (nur die Testpunkte 20 des Fahrbahnzentrums tragen zu $U_l$ bei), wurde gefunden, dass der Optimierungsalgorithmus sehr große und scharfe Beleuchtungsstärkenspitzen an bestimmten Punkten jenseits des Fahrbahnzentrums setzt. Diese großen Beleuchtungsstärkepunkte sind an Positionen mit großen r-Werten, welches dem Algorithmus erlaubt, die mittlere Leuchtdichte $L_{av}$ effizient zu erhöhen. Diese Positionen sind außerhalb des Fahrbahnzentrums, weil $U_l$ kleine und große Leuchtdichtewerte bestraft, während $U_0$ nur kleine Werte bestraft. Deshalb braucht lediglich ein Wert $y_j$ pro Fahrbahn verwendet zu werden, woraus sich eine weitere Reduzierung von k ergibt.

Eine dritte Möglichkeit bezieht sich darauf, dass die resultierende Verteilung zu wellig für die Praxis ist. Zu diesem Zweck kann eine Glattheitsrandbedingung in die Längsrichtung 34 implementiert werden, indem gefordert wird:

$$1-\delta \le \frac{2E_{i,j}}{E_{i-1,j}+E_{i+1,j}} \le 1+\delta \;\; \forall i = 2\ldots n-1 \qquad (29)$$

die eine Grenze in Bezug auf den absoluten Wert eines zweiten abgeleiteten Werts setzt. Daraus kann ein Satz linearer Randbedingungen auf $\vec{E}$ erhalten werden:

$$E_{i,j} - 0.5(1-\delta)(E_{i-1,j}+E_{i+1,j}) \ge 0 \;\; \forall i = 2\ldots n-1$$
$$-E_{i,j} + 0.5(1+\delta)(E_{i-1,j}+E_{i+1,j}) \ge 0 \;\; \forall i = 2\ldots n-1 \qquad (30)$$

welche wiederum einen Satz linearer Randbedingungen auf $\vec{p}$ evaluieren:

$$\omega^i_{+LS}\vec{p} \geq 0 \; \forall i = 2\ldots n-1$$
$$\omega^i_{-LS}\vec{p} \geq 0 \; \forall i = 2\ldots n-1 \qquad (31)$$

Ein Wert von zum Beispiel $\Delta=0{,}2$ stellt sicher, dass der absolute Wert der Abweichung von irgendeinem $E_{i,j}$ vom Mittelwert seines Nachbars in die Längsrichtung 34 begrenzt auf 20% ist. Es könnte jedoch auch in Betracht gezogen werden, nicht-äquidistante x-Abstände durch Begrenzen der Abweichung vom linearen Interpolationswert durch entsprechendes Anpassen des Gewichts in Betracht zu ziehen. Sie können dann wie folgt sein:

$$(1 \pm \delta)(x_{i+1} - x_i)/(x_{i+1} - x_{i-1}) \quad \text{für} \quad E_{i-1}$$
$$(1 \pm \delta)(x_i - x_{i-1})/(x_{i+1} - x_{i-1}) \quad \text{für} \quad E_{i+1}$$

Der Optimierungsalgorithmus weiß möglicherweise nicht, dass die Beleuchtungsstärke nicht negativ sein kann. Es ist deshalb eine entsprechende Einstellung erforderlich. Dies kann einfach dadurch erreicht werden, dass gefordert wird,

$$\vec{E} \geq 0 \Leftrightarrow P\vec{p} \geq 0 \qquad (32)$$

Das Zusammenstellen der Randbedingungen führt im Wesentlichen zu drei Gruppen, und zwar die nichtlineare Schwellwerterhöhung $TI$ Ungleichungsrandbedingungsfunktionen, die linearen Ungleichungsrandbedingungsfunktionen, die durch unterschiedliche W-Vektoren der gleichen Dimension k durch die freien Parameter $\vec{p}$ gegeben sind, und die lineare Randbedingungsgleichung, die durch Symmetrie gegeben ist. Während die Schwellwerterhöhungsrandbedingungen $TI$ gemeinsam eine vektorgewichtete Funktion bilden, deren Komponenten alle $\geq 0$ sein sollen, können die linearen Ungleichungsrandbedingungen durch eine einzige Matrix C, deren Zeilen durch die W-Vektoren gebildet ist, und einen einzigen Vektor b, der aus den entsprechenden Rechtehandseiten gebildet ist, zusammengefasst werden,

$$C\vec{p} \geq b, \qquad C = \begin{pmatrix} \omega^o_{av} \\ \omega^{o,i}_{U0} \\ \omega^{o,i,j}_{Ul} \\ \omega_{SR} \\ -P \\ \omega^i_{\pm LS} \\ P \end{pmatrix}, \qquad b = \begin{pmatrix} L_{av,\min} \\ 0 \\ 0 \\ 0 \\ -\vec{E}_{\max} \\ 0 \\ 0 \end{pmatrix} \qquad (33)$$

wobei die verketteten Komponenten von C und b die entsprechenden Dimensionen aufweisen.
Die Lineargleichungsrandbedingungen sind einfach durch $C_{eq}$ gegeben, wobei

$$C_{eq}\vec{p} = 0, \quad C_{eq} = \omega_{sym} \qquad (34)$$

Zusätzliche nichtlineare Randbedingungen würden lediglich die vektorgewichtete Funktion erweitern, während zusätzliche lineare Randbedingungen lediglich durch Hinzufügen von Zeilen zu C oder $C_{eq}$ implementiert werden können.
Für eine beispielhafte Optimierung wird im Folgenden auf Basis von Matlab® die Optimierungs-Toolbox, wie im Folgenden angegeben, benutzt. Matlab® bietet ferner

- große Flexibilität und Leichtigkeit bei einer interaktiven, interpretierten (nicht kompilierten) Programmumgebung,
- die Möglichkeit graphische Benutzerschnittstellen zu kreieren,
- Programmierbarkeit mit großen Qualitätsplotten und
- die Verteilung von Rechnerprogrammen ohne Sourcecode, die den Matlab®-Compiler benutzen.

Da der Matlab®-Code interpretiert wird für die Programmausführung außer für im Matlab®-Kern eingebaute Routinen ist er ansonsten grundsätzlich langsam. Die Rechnerzeit stellt einen wichtigen Aspekt dar. Im Folgenden sind die inneren Schleifenunterprogramme in C++ unter Verwendung von Microsoft's Visual Studio Express 2012 IDE® implementiert. Dieses IDE enthält einen Compiler mit guter Geschwindigkeitsoptimierung und ein "Attached Process"-Merkmal erlaubt Debugging des C++-Codes selbst wenn er von Matlab® aufgerufen ist. Der IDE unterstützt auch Debug- und Release-Konfigurationen, wobei Debug-Konfigurationen alle Symbole enthält und nicht Optimierungen wie Inlining Function Calls und Speichern von kleinen Variablen in Rechnerregistern ausführt, während die Release-Konfiguration Code generiert mit allen Geschwindigkeitsoptimierungen.

Um auszuwählen, welche Teile der Routinen in C++ und welche in Matlab®-Code realisiert werden, wird die Norm als Richtlinie genutzt. Alles was in der Norm EN-13201 fest vorgegeben ist, wird in C++ implementiert, wohingegen alles andere in Matlab® geschrieben ist.

Um die C++-Engine zu schreiben, wurde die Verwendung von komplexen Elementen wie Template-Metaprogramming vermieden, um den Code einfach nachvollziehbar zu halten, wohingegen die Vorteile der C++-Sprachstruktur angewendet werden, wo es wirklich Sinn macht. Dabei wird der "RAII"-Ansatz verfolgt (Resource Acquisition Is Initialization).

Selbst wenn die Datenstrukturen sehr komplex sind, sind dort keine Aufrufe zu "malloc", "new", "delete". Stattdessen werden die STL-Container oft verwendet, welche Speicher zuweisen und freigeben in ihren Konstruktoren und Destruktoren. Darüber hinaus wird Open Source Code von Boost (www.boost.org), Version 1.52, verwendet. Die Boost-Lizenz wurde geprüft, damit keine Verletzungsprobleme auftreten, Boost ist Open Source in der Public Domain.

Eine knifflige Sache war ein sorgfältiges Speicherlayout und Indexing. Matlab®-Matrizen sind spaltenorientiert, mit Indizes, die mit 1 beginnen, wohingegen C++-Matrizen zeilenorientiert sind, deren Indizes mit 0 beginnen. Immer wenn eine Matrix von Matlab® kommt oder zu Matlab® geht, wird auf die Matrix MC++-Code zugegriffen, was durch eine kleine Zwischenklasse erfolgt, um dies auszuführen.

Außer für die Berechnung der Schwellwerterhöhung *TI weiß* die DLL nichts über globale Koordinaten und die Arbeit erfolgt in lokalen Koordinaten, wie zuvor erläutert.

Intern hält die DLL eine Liste von Verteilungen, die implementiert sind als std::vector<TIlluminanceGrid> und wird globalIlluminanceGridList genannt. Die Klasse TIlluminanceGrid ist das Ergebnis, wenn die gesamte Arbeit erledigt ist. Dies ist initialisiert mit $x_i$ und $y_j$-Werten, um die internen Datastrukturen zu setzen.

Da ein wichtiger Aspekt der DLL ist, schnell zu sein, wurde versucht, so viele Ergebnisse wie möglich vorauszuberechnen und zu cachen, wobei berücksichtigt wurde, was oft vorkommt und was selten vorkommt. Es kommt selten vor, dass neue Straßenlayouts und Testpunkte 20 definiert werden. Diese bleiben vorzugsweise während einer Optimierung konstant. Dagegen kommt es oft vor, dass $\vec{p}$ und deshalb auch $\vec{E}$ geändert werden.

Die Berechnung der Beleuchtungsstärke und der Leuchtdichte an einem bestimmten Testpunkt 20 (x, y) in lokalen Koordinaten und die Berechnung des Lichtstroms durch Integration über die Kernberechnungen, sollte so schnell wie möglich erfolgen. Die Berechnungen umfassen vorzugsweise die folgenden Schritte:

Beleuchtungsstärke:
(i) Suche diejenigen $x_i$ und $y_j$-Intervalle, zu denen x und y sehr wahrscheinlich gehören mit einer binären Suche (keine Äquidistanz). (ii) Berechne die u, u Interpolationsgewichte. (iii) Berechne die Summe der Interpolationsgewichte mal $G_{i,j}$ Teile, selbstverständlich umfasst nur der letzte Schritt (iii) $E_{i,j}$-Werte, weshalb Ergebnisse von (i) und (ii) in der DLL Vorberechnung zwischengespeichert werden.

Leuchtdichte:
(i) Berechne die Beleuchtungsstärke. (ii) Berechne die r-Werte durch Interpolation der r-Tabelle. (iii) Berechne die q-Werte aus Gleichung (2). (iv) Multipliziere die Beleuchtungsstärke mit q. Selbstverständlich umfassen die Schritte (ii) und (iii) nicht $E_{i,j}$. Da die r-Tabelleninterpolation globale Koordinaten erfordert, und weil die gewöhnliche r-Tabelleninterpolation-Implementierung keine perfekte Umsetzung mit zum Beispiel DIALux ist, wurde die r-Tabelleninterpolation und Berechnung von q in Matlab® realisiert, um eine spätere Änderung einfach zu halten. Nur die Berechnung der Beleuchtungsstärke und die Multiplikation mit dem gecachten q-Wert ist in der DLL für jeden Aufruf ausgeführt.

Lichtstrom:
(i) Berechne $\hat{\omega}_\Phi$-Anteile gemäß Gleichung (15). (ii) Ausführen des Skalarproduktes $\hat{\omega}_\Phi \vec{E}$- Hier kann wieder das Ergebnis von (i) vorberechnet und gecacht werden.

Lichtstrom für den Umgebungsstrom:
(i) Berechne $\hat{\omega}_{SR}$-Anteile gemäß Gleichung (24) aus den globalen Koordinateninformationen über Straßenkantenpositionen und Streifenbreiten. Dies erfordert ein wenig mehr Arbeit, weil y-Intervalle und v-Gewichte gefunden werden müssen. (ii) Ausführen des Skalarproduktes $\hat{\omega}_{SR} \vec{E}$. Hier kann wiederum das Ergebnis aus (i) vorberechnet und gecacht werden.

Während die Berechnung der Beleuchtungsstärke und der Leuchtdichte an individuellen Positionen ausgeführt werden kann, werden die Ergebnisse vorzugsweise für das gesamte Feld von Testpunkten benötigt. Deshalb hält jedes TIlluminanceGrid-Objekt eine std::vector<>-Liste von Interpolationscachedatenstrukturen, die TInterpolInfo genannt werden. Ein TInterpolInfo-Objekt ist initialisiert durch die Verwendung eines Feldes von willkürlichen vielen lokalen x- und y-Koordinaten und einem Feld von entsprechenden q-Werten. In dem seltenen Fall, bei dem nur Beleuchtungsstärkewerte später berechnet werden sollen, kann lediglich ein Dummy-q-Feld der korrekten Länge vorgesehen werden. Im Folgenden braucht lediglich ein Aufruf des Indexes von TInterpolInfo-Eintrag in der Liste erfolgen.

Testläufe haben in einer großen Schleife gezeigt, dass ein individueller Leuchtdichtewert innerhalb von 30ns berechnet werden kann.

Die Schnittstelle baut auf diesen Konzepten und Datastrukturen auf. Für eine Setup-Phase werden Routinen bereitgestellt, die Datastrukturen und Cache-Werte liefern, und den Alterungsfaktor setzen. Für die Optimierungsphase sind Routinen zum Berechnen aller Randbedingungen sowie ihrer Jakobi-Matrizen und für die Schwellwerterhöhung *Tl*, also die Hesse-Matrizen, vorgesehen. Eine Fehlerbehandlung ist implementiert unter Nutzung eines Error Message Stack und eines Warning Message Stack.

Im Folgenden folgt ein Listing der C++ Interface Header-Datei StreetlightingSupport.h.

```
%%%%%%%%%%%%%%%%%%%%%%%%%%%%%%%%%%%%%%%%%%%%%%%%%%%%%%%%
#pragma once
// %%%%%%%%%%%% Basic test functions %%%%%%%%%%%%%%%%%%%%%
// simple test variable
extern int nStreetlightingSupport;
// simple test function, returns 42
int fnStreetlightingSupport();
// Matlab's callib returns a value for each pointer passed,
// even for void functions
// this is the way to act on Matlab variables within C++
// or to return arrays
void MultBy3(double* arr, int nelements);
// Test function for Matlab matrix element access
// Matlab index starts at 1, and uses column major memory
layout !!
// ElementAt (m,3,4,1,1) returns the first element of a
matlab matrix m
// returns NaN if i,j are out of range
double ElementAt(double* m, int n_rows, int n_cols, int i,
 int j);
// %%%%%%%%%%%%%%%%%%%%%%%%%%%%%%%
// Initialization and computation of flux, illuminance and
luminance
// %%%%%%%%%%%%%%%%%%%%%%%%%%%%%%%
```

/*We will keep internal data structures to precompute many things. But there is no good way in Matlab to access C++ classes or to call member functions.

Therefore we keep an indexed list of such data structure classes, and access the member functions by index to that list. A typical call structure would be

```
CreateStreetLightGeometry (1, someXgrid , 17, someYgrid ,
11, 10.5);
CreateStreetLightGeometry 2, someotherXgrid , 9,
someotherYgrid , 5, 7);
Then, we use a matrix called E_grid with illuminance values
on the x-y- grid points, where we use bilinear interpolation
fluxl = TotalFlux(1, E_gridl);
SR2 = SurroundRatio (2, E_grid2 );
... and so on
*/
// We define the geometry as a rectangle given width, and a
rectangular but not equidistant
// array of points where the illuminance is given. Later, we
```

```
use bilinear interpolation to get
// the actual illuminance/luminance at any point.
// The idea is that the geometry is fixed, while the
illuminance on the grid points varies
// during optimization.
// The x-y coordinates are local coordinates of the
luminaire.
// The DLL knows nothing about global coordinates, or
observer positions
void SLS_CreateStreetlightGeometry (int idxGeo , double*
xgrid , int nx , double* ygrid , int ny);
int SLS_NoOfE_grid_Points (int idxGeo); // returns zero on
error
// The E-grid describes the initial lamp distribution. The
average luminance, and indirectly
// the threshold increment, need to take the maintenance
factor into account, while uniformity
// and surround ratio are independent of the MF.
void SLS_SetMaintenanceFactor (int idxGeo, double MF);
// For each evaluation of performance functions, we refer to
a previously created geometry and
// supply the illuminance grid values
// E grid must have size matching with xgrid and ygrid at
Create ... call
// Returns the precise integral of illuminance over area,
with maintenance, or at initial
// conditions (w/o MF);
double SLS TotalFlux_MF(int idxGeo , double* E grid);
double SLS_TotalFlux_Initial(int idxGeo, double* E_grid);
// returns the weight vector, which is the gradient of total
flux, to be supplied to the optimizer.
// Independent of E grid. Assumes that the caller knows the
size of E_grid and provides sufficient
// memory with rv
void SLS_TotalFlux_MF_Gradient(int idxGeo, double* rv);
void SLS_TotalFlux_Initial_Gradient(int idxGeo, double* rv);
// We will evaluate illuminance and luminance values many
times for different E_grids but on the
// same points.
// Therefore, we precompute and cache the interpolation
parameters.
// For each geometry, we can have multiple sets of
precomputed parameters
// important for evaluating the luminances etc. of multiple
identical luminaires
// So for each geometry, we keep an indexed list of such
precomputed parameter sets.
// x, y are the locations on the street
// q is an array of q-values, to be computed outside of this
library,
// using q = r * 10^(-4) H^2 / cos^3 gamma such that L = q
* E
int SLS_GetFreeInterpollnfoCache(int idxGeo); // return index
of available interpol info cache
void SLS_SetInterpollnfoCache(int idxGeo, int idxInterpol,
double* x, double* y, double* q, int npoints);
int SLS_NoOfTestPoints(int idxGeo, int idxInterpol); //
returns zero on error
// Finally, we compute illuminance and luminance. Maintenance
factor (MF) is taken into account
// First, illuminance E
void SLS EMF(int idxGeo, int idxInterpol, double* rv,
double* E_grid);
```

```
void SLS E Initial(int idxGeo, int idxInterpol, double* rv ,
double* E_grid);
// for n E grid points and m test points, returns m x n
matrix of weights.
void SLS_EMF_Jacobi(int idxGeo, int idxInterpol, double*
rv) ;
void SLS_E_Initial_Jacobi(int idxGeo, int idxInterpol,
double* rv);
// now the same for luminance L
void SLS LMF(int idxGeo, int idxInterpol, double* rv,
double* E_grid);
void SLS L Initial(int idxGeo, int idxInterpol, double* rv,
double* E_grid);
// for n E grid points and m test points, returns m x n
matrix of weights.
void SLS_L_MF_Jacobi(int idxGeo, int idxInterpol, double*
rv) ;
void SLS_L_Initial_Jacobi(int idxGeo, int idxInterpol,
double* rv);
// %%%%%%%%%%%%%%%%%%%%%%%%%%%%
// Performance functions : Uniformity , threshold increment
and surround ratio
/ / %%%%%%%%%%%%%%%%%%%%%%%%%%%
// In the standard, the performance functions need to be
evaluated for several observer positions
// and the worst value shall be the operational value
// But minimum and maximum are not "nice" for optimization
// Therefore we don't return minimum and maximum values.
Instead we return the full set of numbers
// from which the minimum and maximum can be taken later.
// In effect, we replace a single constraint which is not
differentiable with a larger number
// of differentiable constraints.
// %%%%% Average luminance %%%%%
// For the same test points, several luminaires may
contribute. The DLL knows nothing about
// observer locations and luminaire locations. So, the idea
is that instead of moving the
// luminaire in global coordinates, the caller puts the
offset caused by
// luminaire position into the x-y values of various test
point grids
// in local luminaire coordinates
// all of which must have the same number and logical
sequence of test points, of course.
// Maintenance factor is taken into account
double SLS_AverageLuminance MF(int idxGeo, int*
idxInterpolList, int n_idxInterpol,
double* E_grid);
// For n E_grid points, the gradient is a vector of length n
void SLS AverageLuminanceMF_Gradient(int idxGeo, double* rv,
int* idxInterpolList, int n_idxInterpol);
// we don't supply "Initial" functions, because the standard
requires
// maintenance taken into account
// %%%%% Overall uniformity %%%%%
// Same thinking for handling several luminaires.
// Overall uniformity is defined as U0 = min (L_i) / L_avg.
// The routine returns the vector L_i / L_avg, from which the
minimum can be easily computed.
// Reason see above
// Maintenance factor is irrelevant
void SLS-OverallUniformity (int idxGeo, double* rv,
```

```
int* idxInterpolList, int n_idxInterpol, double* E_grid);
// For optimization, we need a linear version of the
constraint.
// For U0 >= U0_min, this is (-L_i + U0_min * L_avg) <= 0
void SLS_OverallUniformityConstraint (int idxGeo, double* rv,
int* idxInterpolList, intn_idxInterpol, double U0_min,
double* E_grid);
// for n E_grid points and m test points, returns m x n
matrix of weights.
void SLS_OverallUniformityConstraint-Jacobi (int idxGeo,
double* rv, int* idxInterpolList, int n_idxInterpol, double
U0_min);
// %%%% Longitudinal uniformity %%%%%
// Same thinking for handling several luminaires
// Longitudinal uniformity is defined as L_min/L_max for a
smaller number of test points
// Maintenance factor is irrelevant
// For above reasons, we return the full m x m matrix Ul_ij =
L_i/L_j
// in Matlab column major memory layout.
// including the diagonal elements which by definiton are
L_i/L-i = 1.0
void SLS_LongitudinalUniformity (int idxGeo, double* rv, int*
idxInterpolList, int n_idxInterpol, double* E_grid);
// For optimization, we need the linearized version. Instead
of L_i/L_j > Ul_min,
// we return the matrix - L_i + Ul_min * L_j which should be
<= 0
// but we do not include the diagonal elements here to avoid
entirely inactive constraints.
// Thus, for m test points, the return value is a m-1 x m-1
matrix
// which can be flattened easily in Matlab by rv(:)
void SLS_LongitudinalUniformityConstraint (int idxGeo, double*
rv, int* idxInterpolList, int n_idxInterpol, double Ul_min,
double* E_grid);
// The gradient views the constraint matrix as a flattened
vector, as returned by M(:) in Matlab.
// For n E_grid points and m test points, returns (m-l)^2 x n
matrix of weights.
void SLS_LongitudinalUniformityConstraint_Jacobi (int idxGeo,
double* rv , int* idxInterpolList, int n_idxInterpol, double
Ul_min);
// %%%% Threshold increment %%%%%
// TI really sucks.
// We start with computing the veiling luminance Lv for a
certain observer position
// The contributions of the individual luminaires can be
computed with the same data
// handling approach as the luminance contributions for
individual test points for
// Lavg, U0 and Ul
// The illuminance Ev on the plane perpendicular to the line
of sight is proportional to
// illuminance E on the road at the point where the line from
luminaire to observer hits
// the road, i.e. a test point.
// The factor is only geometry dependent, not depending on
the light distribution
// And the veiling luminance Lv = 10 Ev / theta ^2 is again
proportional to Ev and
// thus to E on the road.
// This routine computes the effective test points in the
```

```
illuminance pattern,
// and the Lv-E proportionality factors to be stored in the q
array.
// Using these test points, the veiling luminance can be
computed by calling
// SLS_L_Initial and summing up the L values
// The routine ignores the 2% cutoff mentioned in the
standard, to avoid the trouble
// with discontinuous dependence of TI on E_grid.
// Thus, the TI values may be slightly overestimated, which
is on the conservative
// side
// Luminaires for which the effective test point is outside
the E_grid are fully ignored,
// since their contribution is 0 by definition.
// Also, we ignore luminaires which are higher than the 20
degrees cutoff plane defined
// in the standard
// RV: Returns the number of test points = number of
luminaires contributing to glare
// Parameters: idxGeo points to the luminaire.
// idxInterpol-VeilingLuminance: Points to the (new) test
point list which will contain
// the points in local luminaire coordinates
where the lines of sight from all relevant luminaires hit the
road behind
// the observer
// x/y globalObserver: Observer position in global
coordinates
// x/y globalLuminaire_0: horizontal position of first
luminaire in global coordinates
// H_Luminaire: height of luminaire above ground
// xLuminaireSpacing: SPacing between luminaires. May be
positive or negative:
If positive. observer looks to the right, if negative,
observer looks to the left.
int SLS_SetInterpolnfoCache_VeilingLuminance (int idxGeo, int
idxInterpol_VeilingLuminance, double xglobal0bserver, double
yglobalObserver, double xglobalLuminaire_0, double
yglobalLuminaire_0, double H_Luminaire, double
xLuminaireSpacing);
// Now we can compute the threshold increment for the
observer.
// idxInterpol-VeilingLuminance points to the test point
array created by the previous call
// idxInterpolList_AverageLuminance points to the list of
test point arrays to be used for
// the average luminance
// returns TI = 65 * Lveil / (Lav)^0.8
// Maintenance factor is ignored: Both Lveil and Lav shall be
evaluated at initial conditions.
// We don't stop the calculation at the 2% threshold in the
standard, to avoid steps
// in the constraint
double SLS-ThresholdIncrement(int idxGeo, int
idxInterpol_VeilingLuminance, int*
idxInterpolList_AverageLuminance, int
n_idxInterpol_AverageLuminance, double* E_grid);
// This is the version of the routine which stops when the
next luminaire contributes
// less than 2% of what we already accumulated
double SLS_ThresholdIncrement_TwoPercent(int idxGeo, int
idxInterpol_VeilingLuminance, int*
```

```
idxInterpolList_AverageLuminance, int
n_idxInterpol_AverageLuminance, double* E_grid);
// The constraint is returned in the form 65 * Lveil - TImax*
Lav^0.8, which should be < 0
// The hope is that this form of the constraint is as similar
to the linear ones as possible
double SLS_ThresholdIncrement_Constraint (int idxGeo, int
idxInterpol_VeilingLuminance, double TImax, int*
idxInterpolList_AverageLuminance, int
n_idxInterpol_AverageLuminance, double* E_grid);
// and its gradient as usual. Unfortunately, we need the
E_grid here: TI is not
// linear due to the ^0.8 power
// With w-veil as the weight vector for the veiling
luminance, and w_av the weight vector
// for the average luminance, the gradient is 65 * w_veil -
0.8* TI_max * (Lav)^(-0.2) * w_av
// However, the nonlinearity is weak: The fifth root of the
average luminance which
// will hopefully remain close to the minimum average
luminance even if the
// observer position varies.
void SLS_ThresholdIncrement_Constraint_Gradient (int idxGeo,
int idxInterpol_VeilingLuminance, double TImax, double* rv,
int* idxInterpolList_AverageLuminance, int
n_idxInterpol_AverageLuminance, double* E_grid);
// Instead of returning the complete Hessian matrix, we only
compute the H*v product
// This is all Matlab needs, and it's very efficient because
H = c*w*wT (the outer product
// of the weights with itself) and therefore H*v =
c*(wT*v)*w.
// The matrix multplication becomes just an inner product
times vector.
// Note that we don't need the veiling luminance: it is
linear and thus disappears in H
void SLS_ThresholdIncrement_Constraint_HessianTimesVector (int
idxGeo, double TImax, double* rv, double* v, int*
idxInterpolList_AverageLuminance, int
n_idxInterpol_AverageLuminance, double* E_grid);
// The hessian is c * wT*w. This routine returns c and w, for
further processing in Matlab
// Only c depends on E_grid, while w depends only on the
geometry setup.
void SLS_ThresholdIncrement_Constraint_HessianInternals(int
idxGeo, double TImax, double* w, double* c, int*
idxInterpolList_AverageLuminance, int
n_idxInterpol_AverageLuminance, double* E_grid);
// %%%% Surround ratio %%%%%%%%%%
// The surround ratio is computed by dividing the average
illuminance on 4 strips
// Two of them just outside the road, two of them just inside
the road.
// SR = (E_avg_outside_l + E_avg_outside_2) / (
E_avg_inside_1 + E_avg_inside_2)
// Since all strips have equal size, SR = Flux_outside /
Flux inside
// Before computing the actual surround ratio, we need to
precompute weights:
void SLS_SetSurroundRatioParameters (int idxGeo, double
yCenter, double roadWidth, double stripWidth);
// Now, we can actually compute the surround ratio
double SLS_SurroundRatio(int idxGeo, double* E_grid);
```

```
// For optimization, we need the linear constraint function,
returning
// SR_min * Flux_in - Flux_out, which should be <= 0
double SLS_SurroundRatio_Constraint (int idxGeo, double*
E_grid, double SR_min);
// and the gradient, which again doesn't depend on E-grid
void SLS_SurroundRatio_Constraint_Gradient(int idxGeo,
double* rv, double SR_min);
//%%%%%%%%%%%%%%%%%%%%%%%%%%%%%%%%%%%%%%%%%%%%%%%%%%%%%%
// Error handling. Exceptions don't propagate out of a DLL.
So we use a stack of error messages.
//%%%%%%%%%%%%%%%%%%%%%%%%%%%%%%%%%%%%%%%%%%%%%%%%%%%%%%
int SLS_NumberOfErrors();
const char* SLS_TopError(); // get the last error
void SLS_PopError(); // remove the last error from the stack
void SLS_ClearErrors(); // remove all errors
// warnings are non lethal errors
int SLS_NumberOfWarnings();
const char* SLS_TopWarning(); // get the last warning
void SLS_PopWarning(); // remove the last warning from the
stack
void SLS_ClearWarnings(); // remove all warnings
//%%%%%%%%%%%%%%%%%%%%%%%%%%%%%%%%%%%%%%%%%%%%%%%%%%%%%%
// These functions are made public just in case someone needs
them later on.
//%%%%%%%%%%%%%%%%%%%%%%%%%%%%%%%%%%%%%%%%%%%%%%%%%%%%%%
// E returns the illuminance at (x,y), if x or y are out of
range, E returns zero
// MF is taken into account.
double SLS_E_MF_Point(int idxGeo, double* E_grid, double x,
double y);
// L returns the luminance at (x,y), for given value of q = r
* 10^(-4) / (cos gamma)^3.
// We require q instead of the r-values from the r-table to
save cosine computations
// MF is taken into account.
double SLS_L_MF_Point (int idxGeo, double* E_grid, double x,
double y, double q);
%%%%%%%%%%%%%%%%%%%%%%%%%%%%%%%%%%%%%%%%%%%%%%%%%%%%%%%
```

Vorliegend werden lediglich einige wenige High-Level-Funktionen-Aufrufe verwendet und die Matlab-Strukturen zur Übergabe von Parametern. Dadurch können Informationen in genannten Feldern gesammelt werden und als Struktur übergeben werden. Eine Straßenbeleuchtungsoptimierung wird in Matlab durchgeführt, wobei lediglich die folgenden drei Funktionen aufgerufen zu werden brauchen:

- Load_SLS_DLL lädt die DLL in den Speicher. Der C++-Header wird nicht gebraucht. Vorliegend wurde ein sogenanntes Proto M-File erstellt.
- Struc=CreateStreetlightingStructure (geo, env) erzeugt das TIlluminanceGrid-Objekt und liefert Informationen über das in dem Return-Wert Struc zurück. Der Parameter geo enthält Straßengeometriefelder, die eine Straßenbreite, die Anzahl von Fahrbahnen, eine Höhe, einen Abstand, einen Überhang und die Oberfläche beschreiben, während env Felder zum Steuern des $E_{i,j}$-Gitters setzt. Hier werden alle individuellen Testpunktgitter für alle Beobachter und alle Randbedingungen gesetzt. Buchhaltungsdaten sind in dem Rückgabewert Struc verfügbar.
- Res=OptimalDistribution (struc, spec, env, opt) verwendet ein zusätzliches Eingabefeld opt, um das Optimierungsproblem aufzusetzen. Alle Randbedingungen können ein- und ausgeschaltet werden mittels Boolean. Werte wie use_Lav. Wichtig ist, dass opt die Matrix P enthält, welche zwischen den freien Parametern $\vec{p}$ und den $\vec{E}$-Werten unter Verwendung der DLL übersetzt.
- EulumdatFile und WriteLTApodization erlauben den Export in Eulumdat und Light Tools Apodization-Dateien.

Alle Aufrufe der DLL erfolgen eingeschlossen in Umgebungsroutinen, die die DLL aufrufen und ein sofortiges Fehlerprüfen nach jedem Aufruf ausführen. Weitere Details können dem voranstehenden Code in FirstScenareoOptimization entnommen werden.

Aufgrund einer Empfehlung wird die Routine fmincon mit einem Zwischenpunktalgorithmus genutzt, die Teil von Matlab's Optimierungstoolbox ist. Fmincon erwartet einen Startwert, einen Scala Function Handle mit seinem Gradienten für die Gütefunktion (hier ist der Gradient konstant), Matrizen und Rechtehandvektoren für die Gleichung und die Ungleichungsrandbedingungen, sowie Vektoren für die unteren und oberen Grenzen von $\vec{p}$. Vorliegend die Syntax von fmincon (Problem) genutzt, die Optimierungsprobleme in einer Struktur mit benannten Feldern zu beschreiben. Innerhalb von OptimalDistribution (struc, spec, env, opt) sind die erwarteten Komponenten durch fmincon Stück für Stück aufgebaut. Abhängig von den Schaltern in der opt-Struktur, können unterschiedlichste Komponenten für Randbedingungen gewählt werden. Schließlich wird die Optimierung gestartet.

Für eine weitere Geschwindigkeitserhöhung sollte die DLL umfasst werden. Vorliegend haben Matlab-Profiler Durchläufe gezeigt, dass es wahrscheinlich die Routine AverageLuminance_Gradient in StreetlightingSupport.cpp ist, die die meiste Rechnerzeit benötigt und die noch nicht gecachte Werte vollumfänglich verwendet. Multithreading ist ein weiterer Weg, die Geschwindigkeit durch Verteilen der Randbedingungen und der Gütefunktionsgleichungen auf mehrere Threads zu verteilen.

Matlab umfasst ein weiteres kommerzielles Paket namens Knitro. Vorzugsweise wird jedoch ipopt verwendet, welches eine Open Source Optimierungsmaschine ist, welche zur Verbesserung von großen Optimierungsproblemen verwendet werden kann.

Anhang: Ist die Schwellwerterhöhung konvex?

Gemäß der europäischen Norm für Straßenbeleuchtung ist die Schwellwerterhöhung *TI* für einen einzelnen Beobachter definiert als

$$TI = 65 \frac{L_{veil}}{L_{av}^{0,8}} \qquad (35)$$

Wobei die Schleierleuchtdichte $L_{veil}$ und die mittlere Leuchtdichte $L_{av}$ ist. Die Lichtverteilung wird durch ein Feld (Spaltenvektor) $\vec{E}$ der Beleuchtungsstärkewerte an bestimmten Punkten des Verkehrswegs parametrisiert, welche Punkte in einem rechteckförmigen Muster angeordnet sind. Zwischen diesen Punkten ist die Beleuchtungsstärke bilinear interpoliert. Sowohl die Schleierleuchtdichte als auch die mittlere Leuchtdichte variieren dann linear mit jeder Komponente von $\vec{E}$ und kann deshalb als eine gewichtete Summe der Komponenten von $\vec{E}$ beschrieben werden, was durch Produkte mit den Spaltenvektoren $\vec{v}$ und $\vec{a}$ ausgedrückt werden kann, die alle nicht negative Koeffizienten aufweisen:

$$L_{veil} = \vec{v}^T \vec{E} \qquad\qquad L_{av} = \vec{a}^T \vec{E} \qquad (36)$$

Die Anforderungen in Bezug auf die Schwellwerterhöhung *TI* fordert, dass für alle Beobachter

$$TI \le TI_{max} \qquad (37)$$

gilt. Während der Optimierung der Lichtverteilung ist die Schwellwerterhöhung der einzige nichtlineare Term. Die Gütefunktion (gesamter Lichtstrom) ist linear in $\vec{E}$ und die anderen Randbedingungen (mittlere Leuchtdichte, Uniformitäten und Umgebungsbeleuchtungsstärkeverhältnis) sind ebenfalls linear. Die Randbedingungen sind an den vorgegebenen Bereich gebunden und, wenn der vorgegebene Bereich für eine lineare Gütefunktion konvex ist, können folgende wichtige Aussagen gemacht werden:

1. Es gibt nur ein einzige globales Optimum. Andre lokale Minima existieren nicht.

2. Konvexe vorgegebene Bereiche sind gut geeignet für das Interior-Point-Verfahren, welches hier das Verfahren der Wahl ist. Das Interior-Point-Verfahren approximiert nichtlineare Randbedingungen durch eine Anzahl von linearen Randbedingungen, sehr ähnlich dem Approximieren einer sphärischen Form durch Wegschneiden von Material mit einem langen planaren Messer. Dies wird schwierig, wenn die sphärische Form einige konkave Vertiefungen aufweist.

Zur Erläuterung wird im Folgenden ein extrem vereinfachtes Szenario dargestellt. Wenn die zu beschreibende Verteilung lediglich durch zwei Parameter beschrieben ist, $\vec{E} = (p_1, p_2)$ und $L_{av} = a_1 p_1$ und $L_{veil} = v_1 p_2$, dann ist die

Spezifikation für die Schwellwerterhöhung

$$\frac{p_2}{p_1^{0,8}} <= c \qquad (38)$$

$$p_2 - cp_1^{0,8} < 0 \qquad (39)$$

mit einer Konstante c, die proportional zur maximalen Schwellwerterhöhung $TI_{max}$ ist. Für eine konstante Schwellwerterhöhung $TI$ ergibt sich

$$p_2 = cp_1^{0,8} \qquad TI \qquad (40)$$

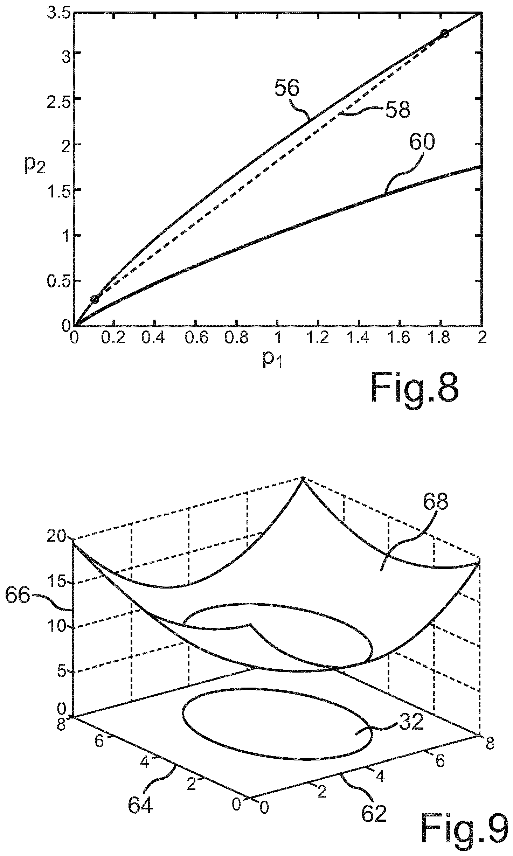

Wie in Fig. 8 dargestellt ergeben Linearkombinationen von zwei möglichen Punkten mit positiven Gewichten wieder mögliche Punkte: der mögliche Bereich für dieses extrem vereinfachte Beispiel ist konvex. Fig. 8 stellt schematisch in einem Diagramm $p_1$ über $p_2$ dar. Dementsprechend ist die Abszisse $p_1$ und die Ordinate $p_2$ zugeordnet. Ein Graph 56 stellt eine Randbedingung bezüglich der Schwellwerterhöhung $TI$ mit c = 1 dar. Ein Graph 60 stellt eine Randbedingung bezüglich der Schwellwerterhöhung $TI$ mit c = 2 dar. Mit 58 ist ein Graph bezeichnet, der eine Linearkombination darstellt.
Im Folgenden wird dies nun durch Terme von zweiten Ableitungen weiter analysiert. Dabei ist $\hat{J}(p_1,p_2) = p_2 - cp_1^{0,8}$ Randbedingungsfunktion mit $\hat{J}(p_1,p_2) < 0$, welches die Randbedingung erfüllt. Dann ist

$$\nabla \hat{J} = \left(1; -0,8cp_1^{-0,2}\right) \qquad (41)$$

$$H(\hat{J}) = \begin{pmatrix} 0 & 0 \\ 0 & 0,16cp_1^{-1,2} \end{pmatrix} \qquad (42)$$

Matlab empfiehlt die fmincon-Routine, wenn die Randbedingungen nicht einfache obere und untere Grenzen sind, und verwendet es bei Nichteinhaltung für große lineare Probleme ebenfalls.
Da $c < 0$ und $p_1 < 0$ ist, hat die Hessematrix $H(\hat{J})$ von $\hat{J}$ nur einen Null-Eigenwert und einen positiven Eigenwert. Sie ist daher positiv semidefinit.
Folglich führt dies dazu, dass für "kleiner als" Randbedingungen es eine hinreichende Bedingung für die Konvexität ist, dass die Hessematrix für die Randbedingungsfunktion überall positiv semidefinit ist (vergleiche Fig. 9). Es ist anzumerken, dass eine Matrix $A$ positiv semidefinit ist, wenn $\vec{p}^T A \vec{p} \geq 0 \forall \vec{p}$.
Fig. 9 zeigt schematisch in einem dreidimensionalen Diagramm, dass, wenn eine Funktion, die eine "weniger als" - Randbedingung definiert, eine positiv semidefinite Hessematrix besitzt hat, der mögliche Bereich konvex ist. Entsprechend ist eine Achse 62 $p_1$, eine Achse 64 $p_2$ und eine Achse 66 der Schwellwerterhöhung $TI$ zugeordnet. Ein Graph 68 stellt die Schwellwerterhöhung $TI$ dar.
Die aktuelle Schwellwerterhöhung $TI$ Randbedingungsfunktion kann wie folgt dargestellt werden:

$$\hat{J}(\vec{E}) = 65\vec{v}^T \vec{E} - TI_{max}(\vec{a}^T \vec{E})^{0,8} <= 0 \qquad (43)$$

und daher

$$\nabla \hat{J} = 65\vec{v}^T - 0,8TI_{max}\left(\vec{a}^T \vec{E}\right)^{-0,2} \vec{a}^T \qquad (44)$$

$$H(\hat{J}) = 0,16TI_{max}(\vec{a}^T \vec{E})^{-1,2} \vec{a}\vec{a}^T \qquad (45)$$

$$H(\hat{J}) = C\vec{a}\vec{a}^T, C > 0 \qquad (46)$$

Alle Koeffizienten von $\vec{E}$, $\vec{a}$ und $\vec{v}$ sind positiv, weil die Beleuchtungsstärke und die Leuchtdichte positiv sein müssen, weshalb $C>0$ ist. Es ist anzumerken, dass $\vec{a}\vec{a}^T$ ein äußeres Produkt ist, das zu einer Matrix führt, und nicht ein inneres Produkt, das zu einem Skalar führt.

Deshalb gilt

$$\vec{p}^T H(\textstyle\int)\vec{p} = C\vec{p}^T\vec{a}\vec{a}^T\vec{p} = C\left(\vec{p}^T\vec{a}\right)^2 \geq 0 \forall \vec{p} \qquad (47)$$

und es ergibt sich, dass die Schwellwerterhöhung in der Tat eine konvexe Randbedingung ist.

Eine zusätzliche Komplexität tritt auf, wenn $\vec{E}$ nicht direkt als der Satz von Variablen in der Optimierung genutzt wird. Dies könnte erforderlich werden:

- es könnte gewünscht sein, die Verteilung symmetrisch zu machen. Dies könnte durch zusätzliche Gleichungsrandbedingungen gehandhabt werden. Wenn jedoch nur eine Hälfte der Verteilung als freie Parameter genutzt wird und die andere Hälfte durch Symmetrie berechnet wird, hat man weniger Randbedingungen und weniger freie Variablen, wodurch sich das Ermitteln der Optimierung beschleunigt.
- Das Umgebungsbeleuchtungsstärkeverhältnis ist lediglich eine einzige Zahl und die einzige Anforderung auf die Lichtverteilung außerhalb des Testpunktmusters auf dem Fahrweg. Deshalb könnte es gewünscht sein, nur einen einzigen freien Parameter für diesen Teil der Verteilung zu haben, welcher einen Weg einer weichen Extrapolation beschreibt.
- Erste Experimente haben gezeigt, dass die optimale Lichtverteilung ein komplexes Muster mit hohem lokalem Kontrast sein könnte. Solche Verteilungen sind unerwünscht, weshalb eine Form von Regulierung gebraucht werden könnte. Einen Weg, dies zu regulieren, ist, eine Lichtverteilung als eine Überlagerung von "wavelets" zusammen zu stellen, zum Beispiel auf Basis von Gaußischen Basisfunktionen oder als ein Fourier Polynom.

Es ist bekannt, dass das Bild einer konvexen Menge unter einer linearen Abbildung immer konvex ist. Deshalb ist die Schwellwerterhöhung $TI$ immer konvex bei freien Parametern $\vec{p}$, solange $\vec{E}$ eine lineare Funktion ist mit $\vec{E} = P\vec{p}$ mit einer Matrix $P$. Es ist anzumerken, dass es nicht erforderlich ist, dass alle Koeffizienten von $P$ nicht negativ sind.

BEZUGSZEICHENLISTE

| 10 | Verkehrswegbeleuchtungseinrichtung |
|----|----|
| 12 | Verkehrswegbeleuchtungseinrichtung |
| 14 | Verkehrsweg |
| 16 | Lichtaustrittsöffnung |
| 18 | Gehäuse |
| 20 | Testpunkt |
| 22 | Verkehrswegoberfläche |
| 24 | Gitter |
| 26 | Gitterlinie |
| 28 | Gitterlinie |
| 30 | Gitterpunkt |
| 32 | Interpolation |
| 34 | Längsrichtung |
| 36 | vorgegebener Bereich |
| 38 | Querrichtung |
| 40 | Kante |
| 42 | Beobachter |
| 44 | Fahrbahn |
| 46 | Fahrbahn |
| 48 | Graph |
| 50 | Graph |
| 52 | Graph |
| 54 | Graph |
| 56 | Graph |

| 58 | Graph |
|----|-------|
| 60 | Graph |
| 62 | Achse |
| 64 | Achse |
| 66 | Achse |
| 68 | Graph |

**Patentansprüche**

1. Verfahren zum Herstellen einer Verkehrswegbeleuchtungseinrichtung (10, 12) zum Beleuchten eines Verkehrswegs (14), bei dem in einem eine Lichtaustrittsöffnung (16) aufweisenden Gehäuse (18) ein Leuchtmittel und eine Optikeinheit derart angeordnet werden, dass von dem Leuchtmittel erzeugtes Licht mittels der Optikeinheit zur Lichtaustrittsöffnung (16) gelenkt wird, damit die Verkehrswegbeleuchtungseinrichtung (10, 12) Licht mit einer vorgegebenen Lichtverteilung zum Beleuchten des Verkehrswegs (14) abgibt, wobei die vorgegebene Lichtverteilung dadurch ermittelt wird, dass:

   - in eine Längsrichtung des Verkehrswegs (14) mehrere äquidistant beabstandete Testpunkte (20) auf einer Verkehrswegoberfläche (22) des Verkehrswegs (14) vorgesehen werden,
   - von jedem der Testpunkte (20) in eine jeweilige testpunktbezogene vorgegebene Richtung Licht mit einer vorgegebenen Leuchtdichte abgegeben wird, und
   - die Optikeinheit und das Leuchtmittel zur Erreichung der vorgegebenen Lichtverteilung gewählt werden, und
   - die Verkehrswegbeleuchtungseinrichtung (10, 12) mit der gewählten Optikeinheit und dem gewählten Leuchtmittel hergestellt wird,

   **dadurch gekennzeichnet, dass**
   für das Ermitteln der Lichtverteilung ergänzend die folgenden Schritte ausgeführt werden:

   - Bereitstellen eines die Testpunkte (20) umfassenden Gitters (24) mit Gitterlinien (26, 28), wobei die Gitterlinien (26, 28) an Kreuzungsstellen Gitterpunkte (30) des Gitters (24) bilden,
   - Festlegen einer bereitzustellenden Beleuchtungsstärke für den Verkehrsweg (14) an den Gitterpunkten (30),
   - Festlegen einer Interpolation (32) für die Beleuchtungsstärke zwischen zwei benachbarten Gitterpunkten (30),
   - Ermitteln der Lichtverteilung abhängig von der Beleuchtungsstärke zwischen den beiden Gitterpunkten (30).

2. Verfahren nach Anspruch 1,
   **dadurch gekennzeichnet, dass**
   die Gitterpunkte (30) in eine Längsrichtung (34) des Verkehrswegs (14) zumindest derart beabstandet werden, dass ein Abstand benachbarter Gitterpunkte (30) mindestens dem Abstand zwischen benachbarten der Testpunkte (20) entspricht.

3. Verfahren nach Anspruch 1 oder 2,
   **dadurch gekennzeichnet, dass**
   eine Gütefunktion für einen durch die Lichtaustrittsöffnung (16) abzugebenden Lichtstrom bereitgestellt wird, die während des Ermittelns der Lichtverteilung minimiert wird.

4. Verfahren nach einem der Ansprüche 1 bis 3,
   **dadurch gekennzeichnet, dass** als Interpolation (32) eine lineare Interpolation festgelegt wird.

5. Verfahren nach Anspruch 4,
   **dadurch gekennzeichnet, dass**
   das Festlegen der linearen Interpolation für die Beleuchtungsstärke eine bilineare Interpolation zwischen benachbarten Gitterpunkten (30) umfasst.

6. Verfahren nach einem der Ansprüche 1 bis 5,
   **dadurch gekennzeichnet, dass**
   die Gitterpunkte (30) in einem rechteckigen, die Testpunkte (20) umfassenden Bereich (36) vorgesehen werden, wobei die Gitterpunkte (30) über den Bereich (36), vorzugsweise ungleichmäßig, verteilt angeordnet sind.

7. Verfahren nach Anspruch 6, **dadurch gekennzeichnet, dass** der Bereich (36) in eine Breitenrichtung (38) des Verkehrswegs (14) durch eine Kante (40) wenigstens eines Seitenstreifens des Verkehrswegs (14) begrenzt wird.

8. Verfahren nach Anspruch 7,
   **dadurch gekennzeichnet, dass**
   Werte der Beleuchtungsstärke an solchen Gitterpunkten (30), die sich an der Kante (40) des wenigstens einen Seitenstreifens des Verkehrswegs (14) befinden, zu null gesetzt werden.

9. Verfahren nach einem der Ansprüche 6 bis 8,
   **dadurch gekennzeichnet, dass**
   eine Erstreckung des Bereichs (36) in die Längsrichtung (34) des Verkehrswegs (14) einer zwölffachen Höhe der Lichtaustrittsöffnung (16) oberhalb der Verkehrswegoberfläche (22) entspricht.

10. Verfahren nach einem der Ansprüche 6 bis 9,
    **dadurch gekennzeichnet, dass**
    die Gitterpunkte (30) des Bereichs (36) in lokalen Koordinaten in Bezug auf einen vorgegebenen Referenzpunkt des Bereichs (36) angegeben werden.

11. Verfahren nach Anspruch 10,
    **dadurch gekennzeichnet, dass**
    der Referenzpunkt durch eine Position der Verkehrswegbeleuchtungseinrichtung (10, 12) vorgegeben wird.

12. Verfahren nach einem der Ansprüche 1 bis 11,
    **dadurch gekennzeichnet, dass**
    die Lichtverteilung ergänzend abhängig von einer Schwellwerterhöhung, einer lichttechnischen Oberflächeneigenschaft der Verkehrswegoberfläche (22), einem Wartungsfaktor und/oder einem Umgebungsbeleuchtungsstärkeverhältnis ermittelt wird.

13. Verfahren nach einem der Ansprüche 1 bis 12,
    **dadurch gekennzeichnet, dass**
    zum Ermitteln der Lichtverteilung eine Symmetrie für eine Anordnung von mehreren Verkehrswegbeleuchtungseinrichtungen (10, 12) in der Längsrichtung (34) des Verkehrswegs (14) berücksichtigt wird.

14. Verfahren nach einem der Ansprüche 1 bis 13,
    **dadurch gekennzeichnet, dass**
    zum Ermitteln der Lichtverteilung geometrische Abmessungen der Lichtaustrittsöffnung (16) vorgegeben werden.

15. Verfahren nach einem der Ansprüche 1 bis 14,
    **dadurch gekennzeichnet, dass**
    das Herstellen der Optikeinheit umfasst:

    - Ermitteln einer geometrischen Abmessung von wenigstens einem optischen Element der Optikeinheit sowie
    - Ermitteln einer Position des wenigstens einen optischen Elements der Optikeinheit im Gehäuse der Verkehrswegbeleuchtungseinrichtung (10, 12).

**Claims**

1. A method for manufacturing a traffic route lighting device (10, 12) for illuminating a traffic route (14), in which a light source and an optical unit are arranged in such a way in a housing (18) having a light exit opening (16), in that light generated by the light source is directed to the light exit opening (16) by means of the optical unit so that the traffic route lighting device (10, 12) emits light with a predetermined light distribution for illuminating the traffic route (14), the predetermined light distribution being determined in that

   - a plurality of equidistantly spaced test points (20) are provided on a traffic route surface (22) of the traffic route (14) in a longitudinal direction of the traffic route (14),
   - light with a predetermined luminance is emitted from each of the test points (20) in a respective test point-related predetermined direction, and

- the optical unit and the light source are selected to achieve the specified light distribution, and
- the traffic route lighting device (10, 12) is manufactured with the selected optical unit and the selected light source,

**characterised in that**
for determining the light distribution, the following additional steps are carried out:

- providing a grid (24) comprising the test points (20) with grid lines (26, 28), the grid lines (26, 28) forming grid points (30) of the grid (24) at intersections,
- defining an illuminance to be provided for the traffic route (14) at the grid points (30),
- defining an interpolation (32) for the illuminance between two adjacent grid points (30),
- determine the light distribution depending on the illuminance between the two grid points (30).

**2.** The method according to claim 1,
**characterised in that**
the grid points (30) are spaced apart in a longitudinal direction (34) of the traffic route (14) at least in such a way that a distance between adjacent grid points (30) corresponds at least to the distance between adjacent ones of the test points (20).

**3.** The method according to claim 1 or 2,
**characterised in that**
a quality function for a luminous flux to be emitted through the light exit opening (16) is provided, which is minimized during the determination of the light distribution.

**4.** The method according to any one of claims 1 to 3,
**characterized in that** a linear interpolation is defined as the interpolation (32).

**5.** The method according to claim 4,
**characterised in that**
the determination of the linear interpolation for the illuminance comprises a bilinear interpolation between adjacent grid points (30).

**6.** The method according to any one of claims 1 to 5,
**characterised in that**
the grid points (30) are provided in a rectangular area (36) comprising the test points (20), wherein the grid points (30) are arranged distributed over the area (36), preferably unevenly.

**7.** The method according to claim 6, **characterized in that** the area (36) is bounded in a width direction (38) of the traffic route (14) by an edge (40) of at least one side strip of the traffic route (14).

**8.** The method according to claim 7,
**characterised in that**
values of the illuminance at such grid points (30) located at the edge (40) of at least one side strip of the traffic route (14) are set to zero.

**9.** The method according to one of claims 6 to 8,
**characterised in that**
an extension of the region (36) in the longitudinal direction (34) of the traffic route (14) corresponds to a twelvefold height of the light exit opening (16) above the traffic route surface (22).

**10.** The method according to one of claims 6 to 9,
**characterised in that**
the grid points (30) of the region (36) are specified in local coordinates with respect to a predetermined reference point of the region (36).

**11.** The method according to claim 10,
**characterised in that**
the reference point is predetermined by a position of the traffic route lighting device (10,12).

**12.** The method according to one of claims 1 to 11,
**characterised in that**
the light distribution is determined additionally depending on a threshold value increase, a photometric surface property of the traffic route surface (22), a maintenance factor, and/or an ambient illuminance ratio.

**13.** The method according to one of claims 1 to 12,
**characterised in that**
for determining the light distribution, a symmetry is taken into account for an arrangement of several traffic route lighting devices (10, 12) in the longitudinal direction (34) of the traffic route (14).

**14.** The method according to one of claims 1 to 13,
**characterised in that**
to determine the light distribution, the geometric dimensions of the light exit opening (16) are specified.

**15.** The method according to one of claims 1 to 14,
**characterised in that**
the manufacturing of the optical unit includes:

- determining a geometric dimension of at least one optical element of the optical unit; and
- determining a position of the at least one optical element of the optical unit in the housing of the traffic route lighting device (10, 12)

**Revendications**

**1.** Procédé de fabrication d'un dispositif d'éclairage de voie de circulation (10, 12) pour l'éclairage d'une voie de circulation (14), dans lequel, dans un boîtier (18) comprenant une ouverture de sortie de lumière (16), un moyen d'éclairage et une unité optique sont disposés de façon à ce que la lumière générée par le moyen d'éclairage soit déviée par l'unité optique vers l'ouverture de sortie de lumière (16) afin que le dispositif d'éclairage de voie de circulation (10, 12) émette une lumière avec une répartition de lumière prédéterminée pour l'éclairage de la voie de circulation (14), dans lequel la répartition de lumière prédéterminée est déterminée par le fait que :

- dans une direction longitudinale de la voie de circulation (14), sont prévus plusieurs points de test (20) équidistants sur une surface (22) de la voie de circulation (14),
- de la lumière avec une densité de lumière prédéterminée est émise par chacun des points de test (20) dans une direction prédéterminée spécifique au point de test et
- l'unité optique et le moyen d'éclairage sont choisis afin d'obtenir la répartition de lumière prédéterminée et
- le dispositif d'éclairage de voie de circulation (10, 12) est fabriqué avec l'unité optique choisie et le moyen d'éclairage choisi,

**caractérisé en ce que**
pour la détermination de la répartition de lumière, les étapes suivantes sont exécutées de manière complémentaire :

- mise à disposition d'une grille (24) avec des lignes de grille (26, 28) comprenant les points de test (20), dans laquelle les lignes de grille (26, 28) constituent, aux points de croisement, des points de grille (30) de la grille (24),
- définition d'une intensité d'éclairage à mettre à disposition pour la voie de circulation (14) au niveau des points de grille (30),
- définition d'une interpolation (32) pour l'intensité d'éclairage entre deux points de grille (30) adjacents,
- détermination de la répartition de lumière en fonction de l'intensité d'éclairage entre les deux points de grille (30).

**2.** Procédé selon la revendication 1,
**caractérisé en ce que**
les points de grille (30) sont distants dans une direction longitudinale (34) de la voie de circulation (14) au moins de façon à ce qu'une distance entre des points de grille (30) adjacents corresponde au moins à la distance entre des points de test (20) adjacents.

**3.** Procédé selon la revendication 1 ou 2,
**caractérisé en ce que**

une fonction de qualité est mise à disposition pour un flux de lumière à émettre à travers l'ouverture de sortie de lumière (16), qui est minimisée pendant la détermination de la répartition de lumière.

4. Procédé selon l'une des revendications 1 à 3,
   **caractérisé en ce que**, en tant qu'interpolation (32), une interpolation linéaire est définie.

5. Procédé selon la revendication 4,
   **caractérisé en ce que**
   la définition de l'interpolation linéaire pour l'intensité d'éclairage comprend une interpolation bilinéaire entre des points de grilles (30) adjacents.

6. Procédé selon l'une des revendications 1 à 5,
   **caractérisé en ce que**
   les points de grille (30) sont prévus dans une zone (36) rectangulaire comprenant les points de test (20), dans lequel les points de grille (30) sont répartis sur la zone (36), de préférence de manière non uniforme.

7. Procédé selon la revendication 6, **caractérisé en ce que** la zone (36) est limitée dans une direction de largeur (38) de la voie de circulation (14) par un bord (40) d'au moins une bande d'arrêt d'urgence de la voie de circulation (14).

8. Procédé selon la revendication 7,
   **caractérisé en ce que**
   les valeurs de l'intensité d'éclairage sont mises à zéro aux points de grille (30) qui se trouvent sur le bord (40) de l'au moins une bande d'arrêt d'urgence de la voie de circulation (14).

9. Procédé selon l'une des revendications 6 à 8,
   **caractérisé en ce que**
   une extension de la zone (36) dans la direction longitudinale (34) de la voie de circulation (14) correspond à douze fois la hauteur de l'ouverture de sortie de lumière (16) au-dessus de la surface de la voie de circulation (22).

10. Procédé selon l'une des revendications 6 à 9,
    **caractérisé en ce que**
    les points de grille (30) de la zone (36) sont indiqués en coordonnées locales par rapport à un point de référence prédéterminé de la zone (36).

11. Procédé selon la revendication 10,
    **caractérisé en ce que**
    le point de référence est prédéterminé par une position du dispositif d'éclairage de voie de circulation (10, 12).

12. Procédé selon l'une des revendications 1 à 11,
    **caractérisé en ce que**
    la répartition de lumière est déterminée, de manière complémentaire, en fonction d'une augmentation de la valeur seuil, d'une propriété de surface concernant la lumière de la surface de la voie de circulation (22), d'un facteur de maintenance et/ou d'un rapport d'intensité d'éclairage ambiant.

13. Procédé selon l'une des revendications 1 à 12,
    **caractérisé en ce que**
    pour la détermination de la répartition de lumière, une symétrie est prise en compte pour une disposition de plusieurs dispositifs d'éclairage de voie de circulation (10, 12) dans la direction longitudinale (34) de la voie de circulation (14).

14. Procédé selon l'une des revendications 1 à 13,
    **caractérisé en ce que**
    pour la détermination de la répartition de lumière, des dimensions géométriques de l'ouverture de sortie de lumière (16) sont prédéterminées.

15. Procédé selon l'une des revendications 1 à 14,
    **caractérisé en ce que**
    la fabrication de l'unité optique comprend :

- la détermination d'une dimension géométrique d'au moins un élément optique de l'unité optique ainsi que
- la détermination d'une position de l'au moins un élément optique de l'unité optique dans le boîtier du dispositif d'éclairage de voie de circulation (10, 12).

Fig.1

Fig.2

| tanΔ | β in degrees | | | | | | | | | | | | | | | | | | | |
|---|---|---|---|---|---|---|---|---|---|---|---|---|---|---|---|---|---|---|---|---|
| | 0 | 2 | 5 | 10 | 15 | 20 | 25 | 30 | 35 | 40 | 45 | 60 | 75 | 90 | 105 | 120 | 135 | 150 | 165 | 180 |
| 0 | X | X | X | X | X | X | X | X | X | X | X | X | X | X | X | X | X | X | X | X |
| 0.25 | X | X | X | X | X | X | X | X | X | X | X | X | X | X | X | X | X | X | X | X |
| 0.5 | X | X | X | X | X | X | X | X | X | X | X | X | X | X | X | X | X | X | X | X |
| 0.75 | X | X | X | X | X | X | X | X | X | X | X | X | X | X | X | X | X | X | X | X |
| 1 | X | X | X | X | X | X | X | X | X | X | X | X | X | X | X | X | X | X | X | X |
| 1.25 | X | X | X | X | X | X | X | X | X | X | X | X | X | X | X | X | X | X | X | X |
| 1.5 | X | X | X | X | X | X | X | X | X | X | X | X | X | X | X | X | X | X | X | X |
| 1.75 | X | X | X | X | X | X | X | X | X | X | X | X | X | X | X | X | X | X | X | X |
| 2 | X | X | X | X | X | X | X | X | X | X | X | X | X | X | X | X | X | X | X | X |
| 2.5 | X | X | X | X | X | X | X | X | X | X | X | X | X | X | X | X | X | X | X | X |
| 3 | X | X | X | X | X | X | X | X | X | X | X | X | X | X | X | X | X | X | X | X |
| 3.5 | X | X | X | X | X | X | X | X | X | X | X | X | X | X | X | X | X | X | X | X |
| 4 | X | X | X | X | X | X | X | X | X | X | X | X | X | X | X | X | X | X | X | X |
| 4.5 | X | X | X | X | X | X | X | X | X | X | X | X | X | X | X | X | X | X | X | X |
| 5 | X | X | X | X | X | X | X | X | X | X | X | X | X | X | X | X | X | X | X | X |
| 5.5 | X | X | X | X | X | X | X | X | X | | | | | | | | | | | |
| 6 | X | X | X | X | X | X | X | X | X | | | | | | | | | | | |
| 6.5 | X | X | X | X | X | X | X | X | | | | | | | | | | | | |
| 7 | X | X | X | X | X | X | X | X | | | | | | | | | | | | |
| 7.5 | X | X | X | X | X | X | X | | | | | | | | | | | | | |
| 8 | X | X | X | X | X | X | X | | | | | | | | | | | | | |
| 8.5 | X | X | X | X | X | X | X | | | | | | | | | | | | | |
| 9 | X | X | X | X | X | X | | | | | | | | | | | | | | |
| 9.5 | X | X | X | X | X | X | | | | | | | | | | | | | | |
| 10 | X | X | X | X | X | X | | | | | | | | | | | | | | |
| 10.5 | X | X | X | X | X | X | | | | | | | | | | | | | | |
| 11 | X | X | X | X | X | X | | | | | | | | | | | | | | |
| 11.5 | X | X | X | X | X | | | | | | | | | | | | | | | |
| 12 | X | X | X | X | X | | | | | | | | | | | | | | | |

# Fig.3

Fig.4

Fig.5

Fig.6

Fig.7

Fig.8

Fig.9

Fig.10